(19) Europäisches Patentamt
European Patent Office
Office européen des brevets

(11) **EP 4 730 331 A1**

(12) **EUROPEAN PATENT APPLICATION**
published in accordance with Art. 153(4) EPC

(43) Date of publication:
**22.04.2026 Bulletin 2026/17**

(21) Application number: **24845749.1**

(22) Date of filing: **17.05.2024**

(51) International Patent Classification (IPC):
**G11B 20/10** (2006.01)   **G11B 20/12** (2006.01)
**G11B 27/19** (2006.01)

(52) Cooperative Patent Classification (CPC):
**H04N 21/4394; G11B 20/10; G11B 20/12;
G11B 27/19; H04N 21/4392; H04N 21/47217;
H04N 21/8106; H04N 21/8456**

(86) International application number:
**PCT/KR2024/006714**

(87) International publication number:
**WO 2025/023445 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.07.2023 KR 20230095562**

(71) Applicant: **Samsung Electronics Co., Ltd.
Suwon-si, Gyeonggi-do 16677 (KR)**

(72) Inventors:
• **HEO, Jin**
  **Suwon-si Gyeonggi-do 16677 (KR)**
• **SOHN, Jaesik**
  **Suwon-si Gyeonggi-do 16677 (KR)**
• **KIM, Boyoung**
  **Suwon-si Gyeonggi-do 16677 (KR)**
• **CHO, Wonguen**
  **Suwon-si Gyeonggi-do 16677 (KR)**
• **CHOI, Joonhyun**
  **Suwon-si Gyeonggi-do 16677 (KR)**

(74) Representative: **Nederlandsch Octrooibureau
P.O. Box 29720
2502 LS The Hague (NL)**

(54) **ELECTRONIC DEVICE FOR OUTPUTTING AUDIO AND OPERATION METHOD THEREFOR**

(57)   Disclosed is an electronic device comprising a memory storing instructions, and a processor. The instructions may cause the electronic device to: acquire, from first media data, a first audio data block corresponding to the end point of the first media data; identify a final playback position of the first audio data block on the basis of the end point; acquire a second audio data block for use as a search target from second media data on the basis of the start point, corresponding to the end point, of the second media data; search a second audio data block for audio data corresponding to the final playback position; determine the playback start position of the second audio data block on the basis of the audio data searched for; and output audio data following the playback start position among the second media data after the audio playback up to the final playback position is completed.

Start

Obtain first audio data block corresponding to end time of first media data — 810

Identify last playback position of first audio data block — 820

Output first media data up to last playback position — 830

Obtain second audio data block corresponding to start time of second media data — 840

Search second audio data block for audio data corresponding to last playback position — 850

Determine playback start position of second audio data block — 860

Output second media data from playback start position — 870

End

FIG. 8

EP 4 730 331 A1

## Description

[Technical Field]

Embodiments of the disclosure relate to an electronic device for outputting audio data and a method for operating the same.

[Background Art]

Along with the development of electronic communication technology, various functions have been integrated into communication devices or electronic devices. These electronic devices have also been implemented to perform interworking functions by communicating and cooperating with other electronic devices. For example, a portable electronic device (e.g., a mobile terminal, tablet terminal, or wearable electronic device) includes a sound source playback function in addition to a communication function, and may play various sound sources associated with applications and output sound, not only from sound sources stored at the time of manufacture but also through installation of additional applications.

[Detailed Description of the Invention]

[Technical Solution]

An electronic device and a method for operating the same according to embodiments of the disclosure may output audio data obtained through demultiplexing and decoding.

An electronic device and a method for operating the same according to embodiments of the disclosure may seamlessly play back audio from separate media files.

An electronic device and a method for operating the same according to embodiments of the disclosure may determine a playback start position of another media file by detecting the same audio data in another media data based on audio data corresponding to a last playback position of one media data.

According to an embodiment of the disclosure, an electronic device may include memory storing instructions, a speaker, and at least one processor operatively connected with the memory and the speaker. The instructions, when executed by the at least one processor, may cause the electronic device to obtain a first audio data block corresponding to an end time of first media data from the first media data. The instructions, when executed by the at least one processor, may cause the electronic device to identify a last playback position of the first audio data block based on the end time. The instructions, when executed by the at least one processor, may cause the electronic device to obtain a second audio data block to be used as a search target from second media data corresponding to the end time, based on a start time of the second media data. The instructions, when executed by the at least one processor, may cause the electronic device to search the second audio data block for audio data corresponding to the last playback position. The instructions, when executed by the at least one processor, may cause the electronic device to determine a playback start position of the second audio data block, based on the detected audio data. The instructions, when executed by the at least one processor, may cause the electronic device to output, to the speaker, audio data starting from the playback start position of the second media data, after completing audio playback of the first media data up to the last playback position of the first audio data block.

According to an embodiment of the disclosure, a method for operating an electronic device may include obtaining a first audio data block corresponding to an end time of first media data from the first media data. The method may include identifying a last playback position of the first audio data block based on the end time. The method may include obtaining a second audio data block to be used as a search target from second media data corresponding to the end time, based on a start time of the second media data. The method may include searching the second audio data block for audio data corresponding to the last playback position. The method may include determining a playback start position of the second audio data block, based on the detected audio data. The method may include outputting, to a speaker, audio data starting from the playback start position of the second media data, after completing audio playback of the first media data up to the last playback position of the first audio data block.

According to an embodiment of the disclosure, in a non-transitory computer-readable storage medium storing one or more programs, the one or more programs may include instructions which, when executed by at least one processor of an electronic device, cause the electronic device to obtain a first audio data block corresponding to an end time of first media data from the first media data, identify a last playback position of the first audio data block based on the end time, obtain a second audio data block to be used as a search target from second media data corresponding to the end time, based on a start time of the second media data, search the second audio data block for audio data corresponding to the last playback position, determine a playback start position of the second audio data block, based on the detected audio data, and output, to a speaker, audio data starting from the playback start position of the second media data, after completing audio playback of the first media data up to the last playback position of the first audio data block.

[Brief Description of Drawings]

The above and other aspects, features, and advantages of a specific embodiment of the disclosure will become more apparent from the following detailed description taken in conjunction with the accompanying drawings.

FIG. 1 is a block diagram illustrating an electronic device in a network environment according to various embodiments.
FIG. 2 is a block diagram illustrating the configuration of an electronic device for outputting audio according to an embodiment of the disclosure.
FIG. 3 is a diagram illustrating split playback of a media file according to an embodiment of the disclosure.
FIG. 4 is a diagram illustrating mismatch between audio data due to the absence of a reference frame according to an embodiment of the disclosure.
FIG. 5 is a diagram illustrating audio interruption due to an inaccurate playback start position according to an embodiment of the disclosure.
FIG. 6 is a diagram illustrating playback of media files including an overlapping recording period according to an embodiment of the disclosure.
FIG. 7 is a block diagram illustrating a configuration for continuous audio playback according to an embodiment of the disclosure.
FIG. 8 is a flowchart illustrating a method for continuous audio playback according to an embodiment of the disclosure.
FIG. 9 is a flowchart illustrating a procedure for determining a last playback position according to an embodiment of the disclosure.
FIG. 10 is a flowchart illustrating a procedure for determining a last playback position for an audio data block according to an embodiment of the disclosure.
FIG. 11 is a diagram illustrating an example of determining a last playback position for media data with a set end time according to an embodiment of the disclosure.
FIG. 12 is a diagram illustrating an example of determining a last playback position for media data without a set end time according to an embodiment of the disclosure.
FIG. 13 is a flowchart illustrating a procedure for determining search target audio data according to an embodiment of the disclosure.
FIG. 14 is a diagram illustrating setting of a demultiplexing start position according to an embodiment of the disclosure.
FIG. 15 is a diagram illustrating a demultiplexing operation from a demultiplexing start position according to an embodiment of the disclosure.
FIG. 16 is a diagram illustrating determination of a search target audio data block according to an embodiment of the disclosure.
FIG. 17 is a flowchart illustrating a procedure for detecting audio data according to an embodiment of the disclosure.
FIG. 18 is a diagram illustrating determination of a search target channel according to an embodiment of the disclosure.
FIG. 19 is a diagram illustrating determination of search reference data based on a last playback position according to an embodiment of the disclosure.
FIG. 20 is a diagram illustrating determination of search reference data based on a last position according to an embodiment of the disclosure.
FIG. 21 is a diagram illustrating audio data search according to an embodiment of the disclosure.
FIG. 22 is a diagram illustrating determination of a playback start position based on a search result according to an embodiment of the disclosure.
FIG. 23 is a diagram illustrating determination of a playback start position based on a search result according to an embodiment of the disclosure.
FIG. 24 is a diagram illustrating an operation in response to failure to detect audio data according to an embodiment of the disclosure.
FIG. 25 is a diagram illustrating an operation of outputting video frames according to a changed timestamp of audio data according to an embodiment of the disclosure.

[Mode for Carrying out the Invention]

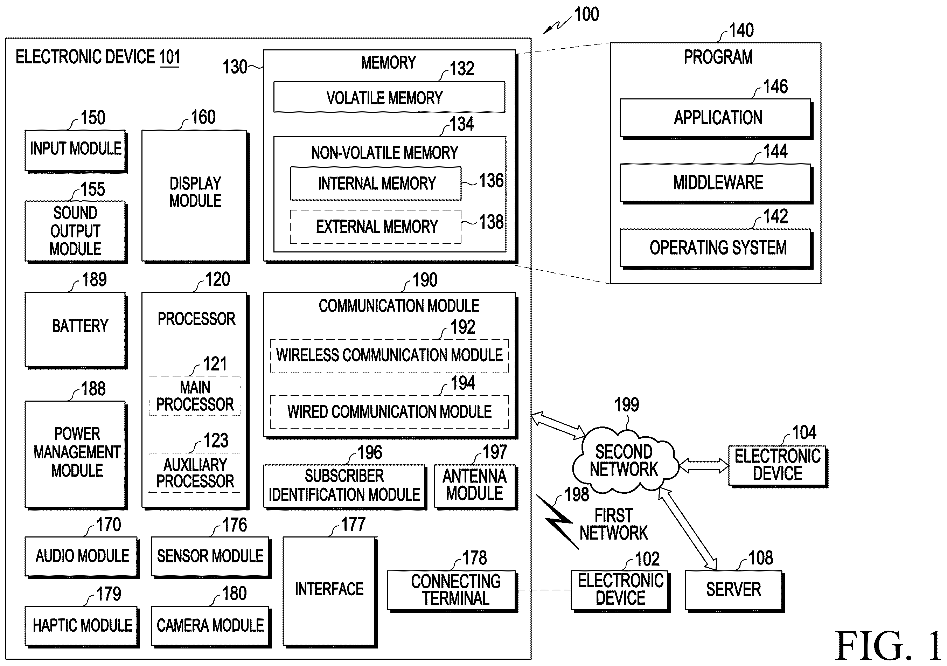

FIG. 1 is a block diagram illustrating an electronic device 101 in a network environment 100 according to an embodiment.
Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

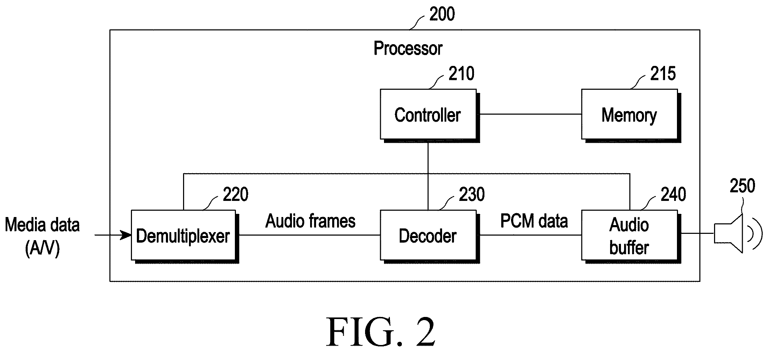

FIG. 2 is a block diagram illustrating the configuration of an electronic device for outputting audio according to an embodiment of the disclosure.

Referring to FIG. 2, an electronic device (e.g., the electronic device 101) may include at least one processor 200 (e.g., the processor 120 of FIG. 1) and a speaker 250 (e.g., the sound output module 155 of FIG. 1). The processor 200 may include at least one of a controller 210, a demultiplexer 220, or a decoder 230. At least one of the controller 210, the demultiplexer 220, or the decoder 230 may be implemented as software executed by the processor 200 or as a hardware module. In an embodiment, at least one of memory 215 or an audio buffer 240 may be included in the processor 200 or may be implemented as separate memory (e.g., the memory 130 of FIG. 1).

The demultiplexer 220 may receive media data (e.g., at least one media file including audio frames and video frames), and demultiplex the media data into audio frames and video frames. The audio frames may be encoded (e.g., compressed) audio frames. The audio frames may be transmitted to the decoder 230. The decoder 230 may generate audio data including pulse code modulation (PCM) data by decoding (e.g., decompressing) the audio frames according to a designated codec (e.g., moving picture experts group (MPEG)). The audio buffer 240 may store the audio data until it is output to the speaker 250. The audio buffer 240 may store the audio data generated by the decoder 230 in units of an audio data block of a designated size.

The controller 210 may control the operation of the demultiplexer 220, the decoder 230, and/or the audio buffer 240. According to disclosed embodiments, the controller 210 may determine frames input to the demultiplexer 220, manage a timestamp indicating a playback start time of PCM data output from the decoder 230, back up (e.g., copy and store) at least a portion of PCM data stored in the audio buffer 240 to the memory 215, and determine PCM data to be output from the audio buffer 240 based on a playback start position (e.g., data position or time position) controlled according to embodiments of the disclosure.

Before outputting the PCM data stored in the audio buffer 240 to the speaker 250, the controller 210 may perform audio rendering (not shown) such as volume adjustment or resampling of sound to be output to the speaker 250. In embodiments of the disclosure, outputting audio data (e.g., PCM) to the speaker 250 may include an operation of performing audio rendering such as volume adjustment or resampling on the audio data.

The memory 215 may store at least one of metadata (e.g., at least one of a sampling rate, a channel count, or a sample byte size) related to at least one media data to be played back, a start time or an end time of the media data, audio data (e.g., at least one audio data block) read from the audio buffer 240, or a timestamp of the audio data, under the control of the controller 210.

The electronic device 101 (e.g., the processor 200 of FIG. 2) may be configured to continuously play back one or more media data (e.g., first media data and second media data). The electronic device 101 (e.g., the processor 200 of FIG. 2) may read one or more media data from memory (e.g., the memory 130 of FIG. 1) or receive the one or more media data from an external electronic device (e.g., the electronic device 102 of FIG. 1, the electronic device 104 of FIG. 1, or the server 108 of FIG. 1) via the communication module 190. In an embodiment, the one or more media data may be received via an audio streaming service.

The electronic device 101 (e.g., the processor 200 of FIG. 2) may obtain audio data (e.g., PCM data) of at least one audio frame of the first media data via the demultiplexer 220 and the decoder 230, store the audio data in the audio buffer 240, and output audio data prior to a designated end time of the first media data and audio data up to the end time of the first media data to the speaker 250. To subsequently play back the second media data, the electronic device 101 (e.g., the processor 200 of FIG. 2) may request the demultiplexer 220 to output at least one audio frame corresponding to a designated start time of the second media data. The electronic device 101 (e.g., the processor 200) may obtain audio data (e.g., PCM data) by decoding at least one audio frame output from the demultiplexer 220 through the decoder 230, and output audio data corresponding to a start time of the second media data and audio data thereafter to the speaker 250.

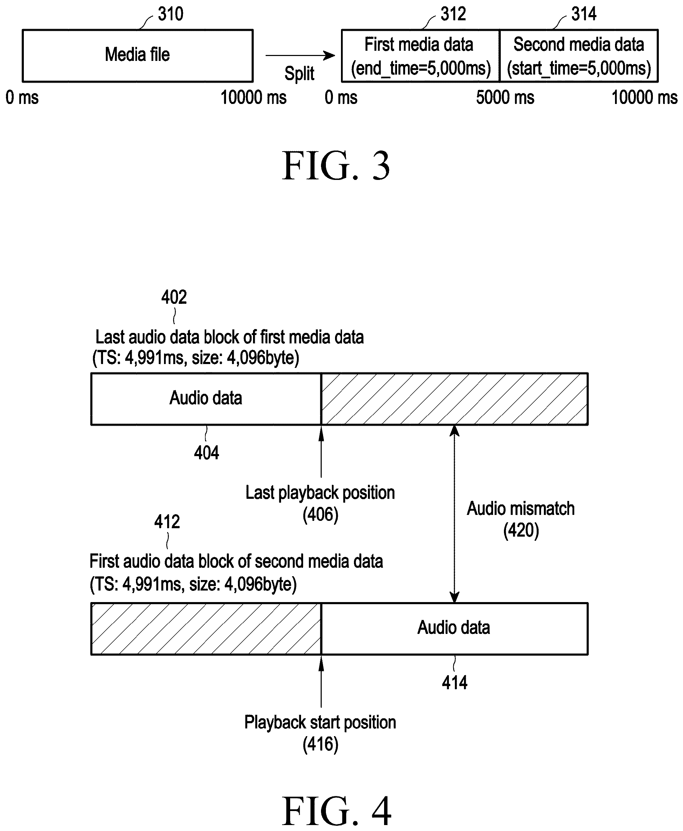

FIG. 3 is a diagram illustrating split playback of a media file according to an embodiment of the disclosure.

Referring to FIG. 3, according to an embodiment, the electronic device 101 (e.g., the processor 200 of FIG. 2) may divide a media file 310 (e.g., media.mp4) with a length of 10,000ms into first media data 312 and second media data 314, and process the first media data 312 and the second media data 314 separately through different demultiplexing and decoding processes (e.g., the demultiplexer 220 and the decoder 230).

According to an embodiment, the electronic device 101 (e.g., the processor 200) may play back the media file 310 by dividing it, based on a designated time point (e.g., 5,000ms), into the first media data 312 corresponding to a period from 0 to 5,000ms and the second media data 314 corresponding to a period from 5,000 to 10,000ms. Accordingly, the designated time point (e.g., 5,000ms) may be set as end_time indicating the end time of the first media data 312 and start_time indicating the start time of the second media data 314, respectively. According to an embodiment, the electronic device 101 (e.g., the processor 200) may control the demultiplexer 220 and the decoder 230 such that the second media data 314 may be played back continuously after the first media data 312.

According to an embodiment, since the first media data 312 and the second media data 314 are configured in frames by the demultiplexer 220, latter audio frames of the first media data 312 may at least partially overlap with former audio frames of the second media data 314. However, depending on the decoding method of the audio frames, audio data at the end time of the first media data 312 and audio data at the start time of the second media data 314 may not be continuous, which may cause audio interruption in audio output to the speaker 250.

For example, the decoder 230 may improve decoding performance by referring to one or more previous audio frames for the decoding of each audio frame. At least one of the former audio frames of the second media data 314 may be decoded without reference audio frames (e.g., previous audio frames), which may reduce continuity with the first media data 312 and cause audio interruption in the audio output to the speaker 250.

FIG. 4 is a diagram illustrating mismatch between audio data due to the absence of a reference frame according to an embodiment of the disclosure.

Referring to FIG. 4, an audio buffer (e.g., the audio buffer 240 of FIG. 2) may store audio data (e.g., PCM data) generated by decoding a designated number (e.g., one or more) of audio frames of the first media data 312, in units of an audio data block. A last audio data block 402 of the first media data (e.g., the second media data 312 of FIG. 3) stored in the audio buffer 240 after demultiplexing and decoding may have, for example, TS=4,991ms and a size of 4,096 bytes. The last audio data block 402 may include audio data generated as a result of decoding at least one audio frame with, for example, TS=4,991ms, and PCM data corresponding to each audio frame may be generated through decoding that references previous audio frames (not shown) within the first media data 312. The electronic device 101 (e.g., the processor 200 of FIG. 2) may output audio data 404 up to a last playback position 406 corresponding to the end_time (e.g., 5,000ms) of the first media data (e.g., the first media data 312 of FIG. 3) in the last audio data block 402 to a speaker (e.g., the speaker 250 of FIG. 2).

According to an embodiment, to continuously play back second media data (e.g., the second media data 314 of FIG. 3) after the first media data 312, the electronic device 101 (e.g., the processor 200) may operate a demultiplexer (e.g., the demultiplexer 220 of FIG. 2) and a decoder (e.g., the decoder 230 of FIG. 2) for the second media data 314. The demultiplexer 220 may start demultiplexing from an audio frame with TS=4,991ms, which is closest to the start_time (e.g., 5,000ms) of the second media data 314, and output audio frames after the demultiplexing to the decoder 230. Through the demultiplexer 220 and the decoder 230, a first audio data block 412 of the second media data 314 corresponding to the start_time (e.g., 5,000ms) of the second media data 314 may be stored in the audio buffer 240. Accordingly, like the last audio data block 402 of the first media data 312, the first audio data block 412 of the second media data 314 may include audio data generated from the at least one audio frame with TS=4,991ms.

The first audio data block 412 of the second media data 314 may include an initial decoding result of the second media data 314 through a separate decoding process from the first media data 312. Since the decoder (e.g., the decoder 230 of FIG. 2) decodes former audio frames of the second media data 314 without previous audio frames available for referencing, the PCM data of the first audio data block 412 of the second media data 314 may be mismatched 420 with the PCM data of the last audio data block 402 of the first media data 312. Due to the PCM data mismatch 420, when the electronic device 101 (e.g., the processor 200) plays back audio data 414 after a playback start position 416 corresponding to the start_time (e.g., 5,000ms) of the first audio data block 412 after playing back the audio data 404 before the last playback position 406 corresponding to the end_time (e.g., 5,000ms) of the last audio data block 402, audio continuity may not be guaranteed, and audio interruption may occur.

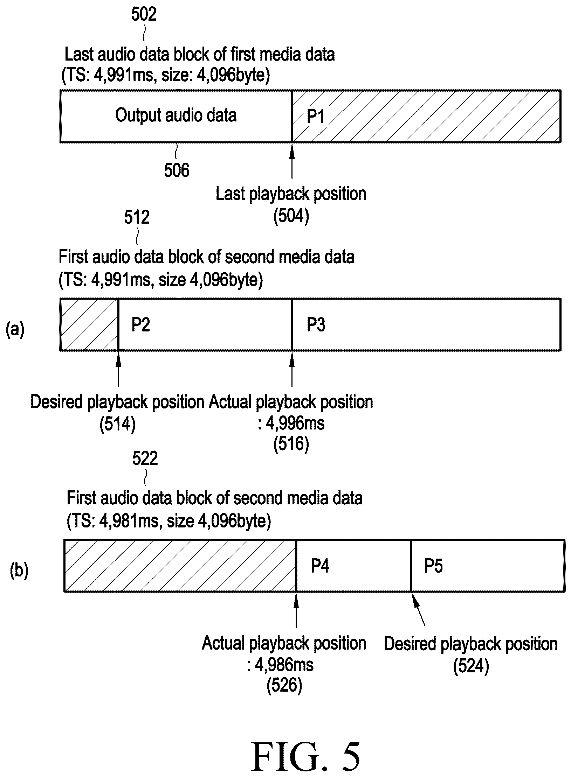

FIG. 5 is a diagram illustrating audio interruption due to an inaccurate playback start position according to an embodiment of the disclosure.

Referring to FIG. 5, the electronic device 101 (e.g., the processor 200 of FIG. 2) may output audio data 506 prior to the end_time of first media data (e.g., the first media data 312 of FIG. 3) to a speaker (e.g., the speaker 250 of FIG. 2), for audio playback of the first media data 312. A last audio data block 502 of the first media data 312 stored in an audio buffer (e.g., the audio buffer 240 of FIG. 2) after passing through a demultiplexer (e.g., the demultiplexer 220 of FIG. 2) and a decoder (e.g., the decoder 230 of FIG. 2), may have, for example, TS=4,991ms and a size of 4,096 bytes. The electronic device 101 (e.g., the processor 200) may output the audio data 506 up to a last playback position P1 504 corresponding to the end_time (e.g., 5,000ms) in the last audio data block 502 of the first media data 312 to the speaker 250.

To continuously play back second media data (e.g., the second media data 314 of FIG. 3), the electronic device 101 (e.g., the processor 200) may operate the demultiplexer 220 and the decoder 230 to output audio data corresponding to the start_time of the second media data 314. The electronic device 101 (e.g., the processor 200) may control the demultiplexer 220 to output at least one audio frame corresponding to the start_time (=5,000ms) in the media file 310.

In the example of (a), due to inaccuracy in determining the position of data to be demultiplexed, the demultiplexer 220 may not accurately detect at least one audio frame corresponding to the position of 4,991ms closest to the start_time in the second media data 314, and may output at least one audio frame starting from a wrong position (e.g., a position of 4,996ms) to the decoder 230. As a result, a first audio data block 512 of the second media data 314 may include audio data (e.g., PCM data) with TS=4,996ms.

The electronic device 101 (e.g., the processor 200) may assume that the first audio data block 512 includes audio data with TS=4,991ms, and output audio data from an actual playback position P3 516 based on the last playback position 504 of the first media data 312 to the speaker 250. However, a desired playback position P2 514 that actually includes audio data corresponding to the last playback position 504 of the first media data 312 is earlier than the actual playback position P3 516, and accordingly, the audio data in a period from P2 to P3 may be lost.

In the example of (b), due to inaccuracy in determining the position of data to be demultiplexed, the demultiplexer 220 may not accurately detect the audio frame corresponding to the audio data at the position of 4,991ms closest to the start_time in the second media data 314, and may output at least one audio frame starting from a wrong position (e.g., a position of 4,986ms) to the decoder 230. As a result, a first audio data block 522 of the second media data 314 may include audio data (e.g., PCM data) with TS=4,986ms.

The electronic device 101 (e.g., the processor 200) may assume that the first audio data block 522 includes the audio data with TS=4,991ms, and output audio data from an actual playback position P4 526 based on the last playback position 504 of the first media data 312 to the speaker 250. However, a desired playback position P5 524 that actually includes the audio data corresponding to the last playback position 504 of the first media data 312 is later than the actual playback position P4 526, and accordingly, the audio data in a period from P4 to P5 may be redundantly output.

As described above, due to the absence of a reference frame during decoding or the inaccuracy of determining a position to be demultiplexed, audio data of the second media data 314 may overlap with some audio data of the first media data 312, or some audio data of the second media data 314 may be omitted from audio playback, which may cause audio interruption.

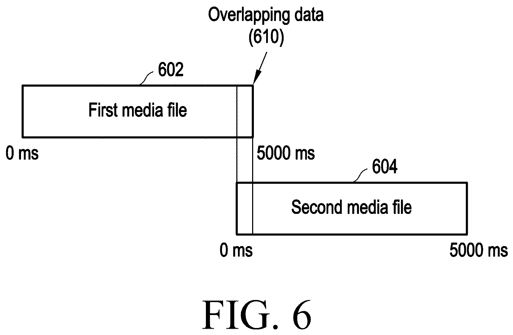

FIG. 6 is a diagram illustrating playback of media files including an overlapping recording period according to an embodiment of the disclosure.

Referring to FIG. 6, a first media file 602 and a second media file 604 may be recorded separately and include at least partially overlapping data 610, for example, through a motion photo function. When the electronic device 101 (e.g., the processor 200 of FIG. 2) plays back the first media file 602 and the second media file 604, which include the overlapping data 610, a user watching the video may determine that the audio playback quality is poor because the audio and video of the overlapping data 610 are redundantly output.

As described above, due to audio interruption or audio overlap that may occur during the continuous playback of first media data (e.g., the first media data 312 of FIG. 3 or the first media file 602 of FIG. 6) and second media data (e.g., the second media data 314 of FIG. 3 or the second media file 604 of FIG. 6) which may include overlapping data, the user may experience an unpleasant sensation such as a ticking sound, which may cause discomfort.

In embodiments of the disclosure, when continuously playing back first media data (e.g., the first media data 312 or the first media file 602) and second media data (e.g., the second media data 314 or the second media file 604), the electronic device 101 (e.g., the processor 200) may obtain a last audio data block corresponding to the end time of the first media data and mark a last playback position within the last audio data block.

In embodiments of the disclosure, media data may include audio data (e.g., compressed audio frames), video data (e.g., compressed video frames), and metadata, and a media file (e.g., the media file 310) may be defined as a collection of media data for a designated time or a designated capacity, which are stored with a single extension in memory. In embodiments of the disclosure, the first media data or the second media data may be defined as a unit of media data that is an input for a demultiplexing and decoding process for audio playback. In embodiments of the disclosure, the first media data or the second media data may be defined as a single media file or at least a portion of a single media file.

In embodiments of the disclosure, an audio data block (e.g., a first audio data block or a second audio data block) may be defined as a single data unit including PCM data of a designated size generated through decoding. In an embodiment, an audio data block may be defined as a set of PCM data generated by decoding a designated number (e.g., one or more) of audio frames output from a demultiplexer (e.g., the demultiplexer 220 of FIG. 2) by a decoder (e.g., the decoder 230 of FIG. 2). In embodiments of the disclosure, the first audio data block or the second audio data block may be a minimum unit of split processing for audio playback.

In embodiments of the disclosure, the electronic device 101 (e.g., the processor 200) may obtain the first audio data block as a search target, which corresponds to the start time of the second media data, and accurately determine the playback start position of the second media data by detecting audio data identical to audio data at the last playback position in the second audio data block.

Embodiments of the disclosure may prevent audio interruption, when a single media file (e.g., the media file 310) is divided and continuously played back, and may remove overlapping data and continuously play back audio and video without interruptions, when media files (e.g., the media files 602 and 604) including an overlapping recording period are continuously played back.

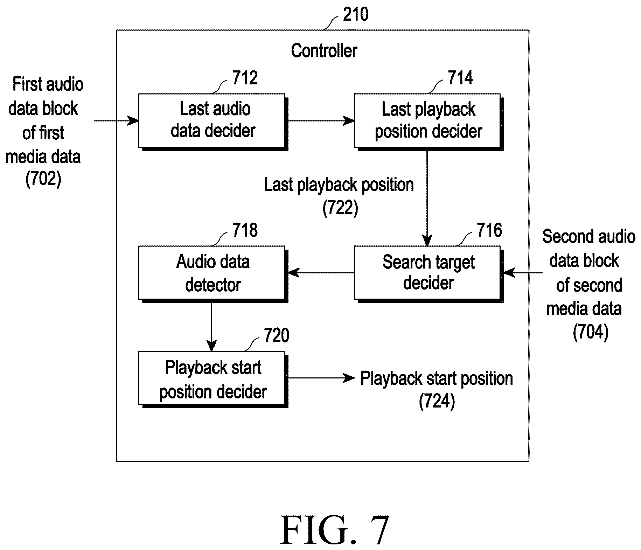

FIG. 7 is a block diagram illustrating a configuration for continuous audio playback according to an embodiment of the disclosure.

Referring to FIG. 7, the electronic device 101 (e.g., the processor 200 of FIG. 2) may include a last audio data decider 712, a last playback position decider 714, a search target decider 716, an audio data detector 718, and a playback start position decider 720. In an embodiment, at least one of the audio data decider 712, the last playback position decider 714, the search target decider 716, the audio data detector 718, or the playback start position decider 720 may be implemented as a software module executed by the processor 200. According to an embodiment, at least one of the audio data decider 712, the last playback position decider 714, the search target decider 716, the audio data detector 718, or the playback start position decider 720 may be implemented as a separate processor.

According to an embodiment, the last audio data decider 712 may receive a first audio data block 702 including PCM data generated by decoding at least one audio frame of first media data (e.g., the first media data 312 or the first media file 602) from the audio buffer 240, and identify that the first audio data block 702 includes PCM data corresponding to the end_time of the first media data 702. The last audio data decider 712 may read the first audio data block 702 from the audio buffer 240 and back it up (e.g., copy and store it) in another memory space. In an embodiment, the first audio data block 702 may be stored in the memory 215.

According to an embodiment, the last playback position decider 714 may determine a last playback position 722 of the first audio data block 702. In an embodiment, the last playback position 722 may include a byte offset from the start time of the first audio data block 702. For example, the last playback position 722 may indicate the last byte of audio data (e.g., the audio data 404 or the audio data 506) used for audio playback in the first audio data block 702.

According to an embodiment, the search target decider 716 may control the demultiplexer 220 to output at least one audio frame as a search target among audio frames that form second media data (e.g., the second media data 314 or the second media file 604), and receive a second audio data block 704 including PCM data generated by decoding the at least one audio frame from the audio buffer 240 by the decoder 230.

According to an embodiment, the audio data detector 718 may determine search reference audio data in the first audio data block 702 based on the last playback position 722 determined by the last playback position decider 714. The audio data detector 718 may use the search reference audio data to search the second audio data block, determine whether the second audio data block includes audio data identical to the search reference audio data, and determine the position of the audio data identical to the search reference audio data.

According to an embodiment, the playback start position decider 720 may determine the position detected by the audio data detector 718 as a playback start position 724 of the second media data.

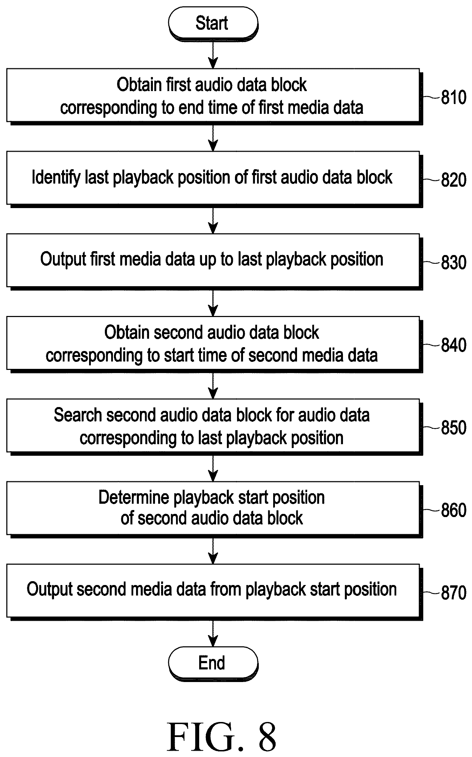

FIG. 8 is a flowchart illustrating a method for continuous audio playback according to an embodiment of the disclosure. In an embodiment, at least one of the operations described below may be performed by the electronic device 101 (e.g., the processor 200 of FIG. 2). According to embodiments, at least one of the operations described below may be omitted, modified, or reordered. For example, at least one of the operations described below may be performed in parallel with another operation or may be performed regardless of the illustrated order.

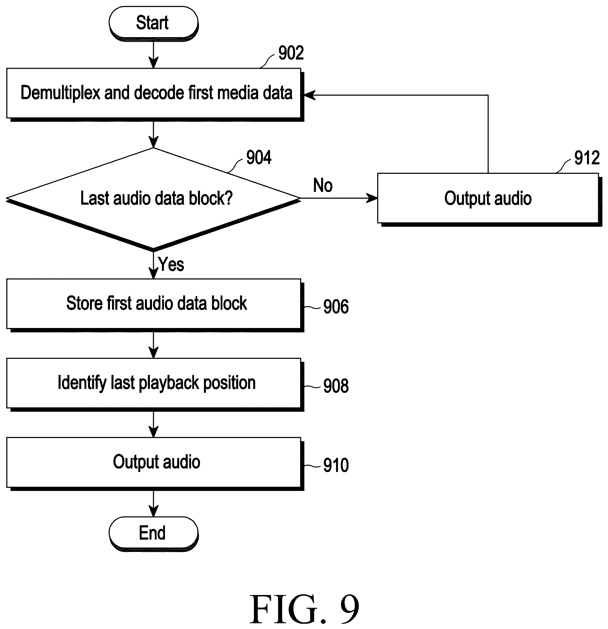

Referring to FIG. 8, in operation 810, the electronic device 101 (e.g., the processor 200 of FIG. 2) may obtain a first audio data block corresponding to a designated end time (e.g., end_time) of first media data (e.g., the first media data 312 of FIG. 3 or the first media file 602 of FIG. 6) from the first media data. In an embodiment, the electronic device 101 (e.g., the processor 200) may obtain at least one latter audio frame among a plurality of audio frames of the first media data by a demultiplexer (e.g., the demultiplexer 220 of FIG. 2), and may read the first audio data block, which includes PCM data obtained by decoding the at least one audio frame by a decoder (e.g., the decoder 230 of FIG. 2), from an audio buffer (e.g., the audio buffer 240). In an embodiment, operation 810 may include at least one of operation 902, operation 904, or operation 906 of FIG. 9.

In operation 820, the electronic device 101 (e.g., the processor 200) may identify a first data position (e.g., the last playback position 722 of FIG. 7) related to last audio data to be used for audio playback in the first audio data block, based on the end time. In an embodiment, the last playback position may indicate the position of the last audio data (e.g., one byte) used for audio playback in the first audio data block, or the position of the next data (e.g., one byte) after the last audio data used for audio playback in the first audio data block. For example, the last playback position may include a byte offset from the start time of the first audio data block. For example, the last playback position may indicate which byte the last audio data or the next data is located at in the first audio data block.

In an embodiment, operation 820 may include operation 908 of FIG. 9. In an embodiment, the electronic device 101 (e.g., the processor 200) may determine the last playback position based on at least one of the timestamp and size of the first audio data block, or the end time (end_time) of the first media data.

In operation 830, the electronic device 101 (e.g., the processor 200) may continue to play (e.g., output to the speaker 250) audio data up to the last playback position of the first audio data block. Although operation 830 is shown as being performed after operations 810 and 820, the electronic device 101 (e.g., the processor 200) may perform at least one of operation 810, operation 820, operation 840, operation 850, or operation 860, while playing back the audio data of the first media data up to the last playback position. In an embodiment, operation 830 may include operation 910 of FIG. 9. In an embodiment, the electronic device 101 (e.g., the processor 200) may complete the audio playback of the first media data after playing back the audio data up to the last playback position. According to an embodiment, the electronic device 101 (e.g., the processor 200) may complete the audio playback of the first media data after playing back the audio data up to the last playback position and audio data at the last playback position.

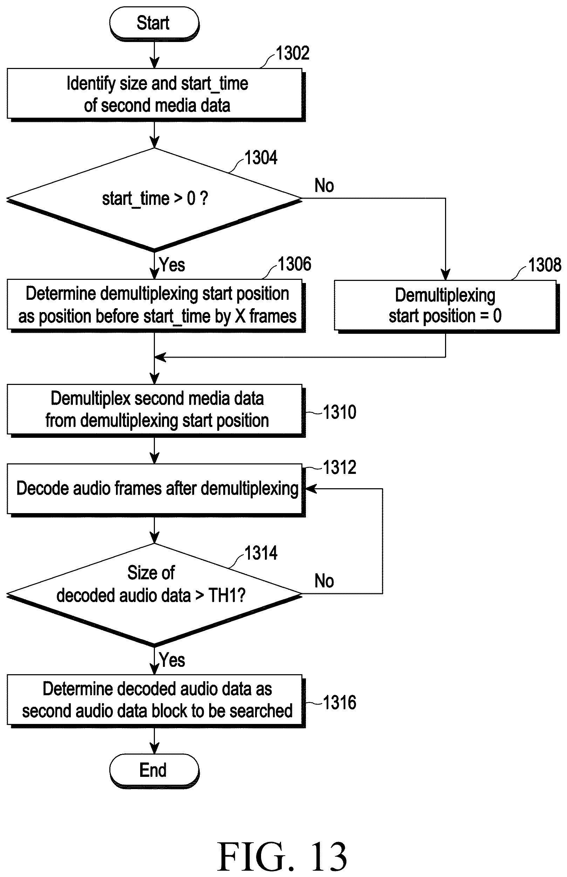

In operation 840, the electronic device 101 (e.g., the processor 200) may obtain a second audio data block corresponding to a designated start time of second media data (e.g., the second media data 314 or the second media file 604). In an embodiment, the electronic device 101 (e.g., the processor 200) may obtain one or more former audio frames among a plurality of audio frames of the second media data by the demultiplexer 220, and read the second audio data block, which includes PCM data obtained by decoding the one or more audio frames by the decoder 230 from the audio buffer 240. In an embodiment, operation 840 may include the procedure of FIG. 13.

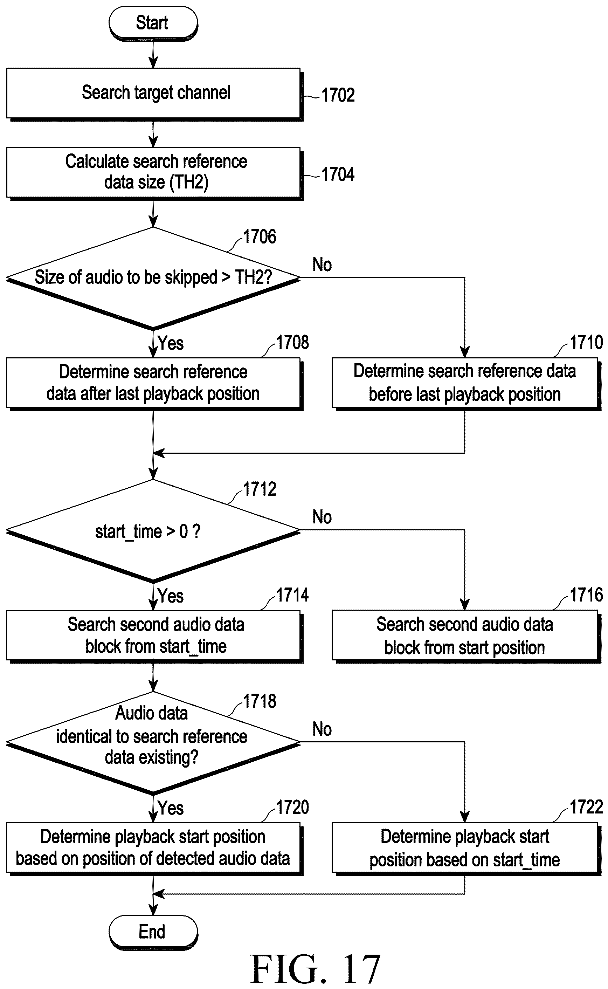

In operation 850, the electronic device 101 (e.g., the processor 200) may search the second audio data block for audio data corresponding to the last playback position. In an embodiment, the electronic device 101 (e.g., the processor 200) may determine search reference audio data in the first audio data block 702 based on the last playback position identified in operation 820, and search the second audio data block for audio data identical to the search reference audio data. In an embodiment, operation 850 may include the procedure of FIG. 17.

In operation 860, the electronic device 101 (e.g., the processor 200) may determine a data position (e.g., the playback start position 724) related to first audio data to be used for audio playback in the second audio data block, based on the detected audio data. In an embodiment, the playback start position may indicate the start position (e.g., byte position) of the detected audio data, or a position prior to the detected audio data. For example, the playback start position may include a byte offset from the start time of the second audio data block.

In operation 870, after completing the audio playback of the first media data based on the last playback position, the electronic device 101 (e.g., the processor 200) may output audio data (e.g., PCM data) of the second media data from the playback start position of the second audio data block to the speaker 250. According to an embodiment, the electronic device 101 (e.g., the processor 200) may complete the audio playback of the first media data by outputting the audio data up to the last playback position of the first audio data block to the speaker 250. The electronic device 101 (e.g., the processor 200) may then output audio data at the playback start position and audio data after the playback start position to the speaker 250.

FIG. 9 is a flowchart illustrating a procedure for determining a last playback position according to an embodiment of the disclosure. In an embodiment, at least one of the operations described below may be performed by the electronic device 101 (e.g., the processor 200). According to embodiments, at least one of the operations described below may be omitted, modified, or reordered. For example, at least one of the operations described below may be performed in parallel with another operation or may be performed regardless of the illustrated order. In an embodiment, the procedure of FIG. 9 may correspond to operations 810, 820, and 830 of FIG. 8.

Referring to FIG. 9, in operation 902, the electronic device 101 (e.g., the processor 200 of FIG. 2) may demultiplex and decode first media data (e.g., the first media data 312 of FIG. 3 or the first media file 602 of FIG. 6) to obtain a first audio data block (e.g., the first audio data block 702 of FIG. 7) that includes PCM data corresponding to at least one audio frame. In an embodiment, the electronic device 101 (e.g., the processor 200) may read the first audio data block from an audio buffer (e.g., the audio buffer 240 of FIG. 2).

In operation 904, the electronic device 101 (e.g., the processor 200) may determine whether the first audio data block is the last audio data block of the first media data.

In an embodiment, when an end_time (e.g., a playback end time set by the processor 200 to identify the first media data 312 in the media file 310) indicating the end time of the first media data is set, the electronic device 101 (e.g., the processor 200) may determine whether the first audio data block includes audio data corresponding to the end_time, based on the timestamp and size of the first audio data block. The electronic device 101 (e.g., the processor 200) may identify the timestamp of the audio data block from at least one audio frame corresponding to the audio data block before demultiplexing and decoding.

For example, the electronic device 101 (e.g., the processor 200) may calculate a playback time length (e.g., in ms or μs) corresponding to the size (e.g., in bytes) of the first audio data block, based on at least one of a sampling rate, a channel count, or a sample byte size applied to the first media data. When the playback end time of the first audio data block, which is calculated as the sum of the timestamp and the playback time length of the first audio data block, is after the end_time, the electronic device 101 (e.g., the processor 200) may determine that the first audio data block is the last audio data block of the first media data. When the playback end time of the first audio data block is before the end_time, the electronic device 101 (e.g., the processor 200) may determine that the first audio data block is not the last audio data block of the first media data.

In an embodiment, when the end_time indicating the end time of the first media data is not set (e.g., when the first media data includes the first media file 602), the electronic device 101 (e.g., the processor 200) may determine whether the first audio data block includes the last decoding result in which audio data exists. When no subsequent decoding result exists, the electronic device 101 (e.g., the processor 200) may determine that the first audio data block is the last audio data block of the first media data. When a subsequent decoding result exists, the electronic device 101 (e.g., the processor 200) may determine that the first audio data block is not the last audio data block of the first media data.

According to an embodiment, when determining that the first audio data block is the last audio data block of the first media data, the electronic device 101 (e.g., the processor 200) may proceed to operation 906. On the contrary, when determining that the first audio data block is not the last audio data block of the first media data, the electronic device 101 (e.g., the processor 200) may proceed to operation 912.

In operation 912, the electronic device 101 (e.g., the processor 200) may output the audio data of the first audio data block to the speaker 250.

In operation 906, the electronic device 101 (e.g., the processor 200) may back up (e.g., copy and store) the first audio data block in a separate memory area (e.g., the memory 215) so that it may be used for a subsequent audio search (e.g., operation 850).

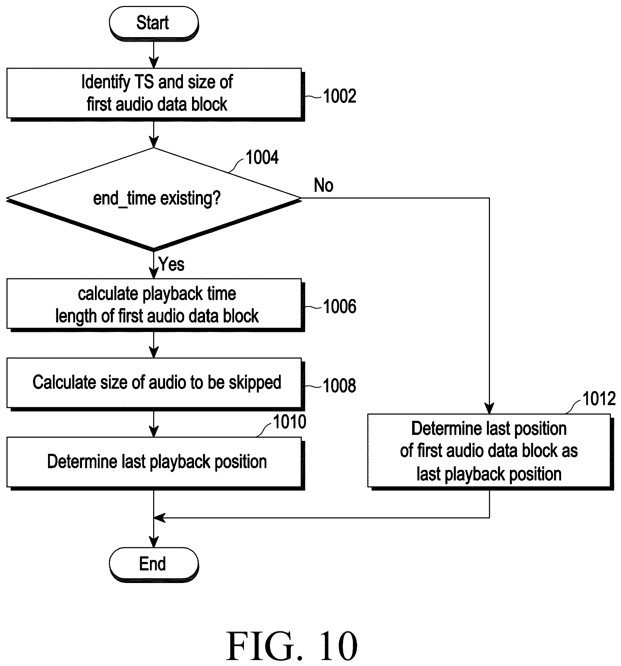

In operation 908, the electronic device 101 (e.g., the processor 200) may identify a last playback position corresponding to the end_time of the first media data from the first audio data block. The last playback position may be calculated based on metadata (e.g., at least one of a sampling rate, a channel count, or a sample byte size of the first media data), the timestamp of the first audio data block 1100, or an end_time set for at least one of the first media data. An embodiment of operation 908 may be described later with reference to FIG. 10.

In operation 910, the electronic device 101 (e.g., the processor 200) may output audio data (e.g., audio data 1102 to be used) up to the last playback position of the first audio data block to the speaker 250. The remaining audio data (e.g., audio data 1104 to be skipped) at and after the last playback position may be skipped without being output to the speaker 250. For example, the remaining audio data may be deleted immediately or after a designated time.

FIG. 10 is a flowchart illustrating a procedure for determining a last playback position for an audio data block according to an embodiment of the disclosure. In an embodiment, at least one of the operations described below may be performed by the electronic device 101 (e.g., the processor 200 of FIG. 2). According to embodiments, at least one of the operations described below may be omitted, modified, or reordered. For example, at least one of the operations described below may be performed in parallel with another operation or may be performed regardless of the illustrated order. In an embodiment, the procedure of FIG. 10 may correspond to operation 908 of FIG. 9.

Referring to FIG. 10, in operation 1002, the electronic device 101 (e.g., the processor 200 of FIG. 2) may identify the timestamp (TS) and size of a first audio data block. The electronic device 101 (e.g., the processor 200) may pre-store in memory (e.g., the memory 215 of FIG. 2) or read from the memory metadata (e.g., at least one of a sampling rate, a channel count, or a sample byte size) related to first media data (e.g., the first media data 312 of FIG. 3 or the first media file 602 of FIG. 6).

In operation 1004, the electronic device 101 (e.g., the processor 200) may determine whether an end_time indicating a set playback end time exists for the first media data. For example, for the first media data (e.g., the first media data 312) identified for split playback, an end_time corresponding to a split position (e.g., 5,000ms) designated by the electronic device 101 (e.g., the processor 200) may be set. For example, the separately generated first media data (e.g., the first media file 602) may not have an end_time. When an end_time exists, the electronic device 101 (e.g., the processor 200) may proceed to operation 1006. When an end_time does not exist, the electronic device 101 (e.g., the processor 200) may proceed to operation 1012.

In operation 1006, the electronic device 101 (e.g., the processor 200) may calculate the playback time length of the first audio data block based on the size of the first audio data block.

For example, parameter values used to calculate the last playback position are as follows. Although the following example is described using millisecond (ms) as the unit of time, other examples using microsecond ($\mu$s) may also be available.

- sampling_rate: 48,000
- channel_count: 2 (e.g., left channel and right channel)
- sample_size_byte: 2
- Timestamp (TS) of the first audio data block: 4,991ms
- Size pcm_byte of the first audio data block: 4,096 bytes
- end_time: 5,000ms

The electronic device 101 (e.g., the processor 200) may calculate the playback time length (e.g., pcmByteToTimeMs) of the first audio data block based on the size (e.g., pcm_byte) of the first audio data block, as follows:

pcmByteToTimeMs = pcm_byte $\times$ 1,000,000 / sample_rate / channel_count / sample_size_byte

$$21.333\text{ms} = 4,096 \times 1,000,000 / 48,000 / 2 / 2$$

As described above, the playback time length corresponding to the first audio data block is 21.333ms.

In operation 1008, the electronic device 101 (e.g., the processor 200) may calculate an audio size to be skipped in the first audio data block.

In the above-described example, the sum of the timestamp of the first audio data block and the playback time length is 4,991 + 21.333 = 5012.333ms. To play up to the end_time of 5,000ms, audio data (e.g., the audio data 1104 to be skipped) corresponding to the last 12.333ms (= 5012.333ms - 5000ms) of the first audio data block may be skipped.

Let drop_time1 be 12.333ms (= 12,333$\mu$s), and the electronic device 101 (e.g., the processor 200) may calculate the size (e.g., skipAudioSize1) of the audio data to be skipped in the first audio data block, as follows:

pre_skipAudioSize1 = sampling_rate $\times$ channel_count $\times$ sample_size_byte $\times$ drop_time1 / 1,000,000

$$\text{skipAudioSize1} = \text{FrameSize roundup pre\_skipAudioSize1}$$

$$2,367 = 48,000 \times 2 \times 2 \times 12,333 / 1,000,000$$

$$2,368 = \text{FrameSize roundup } 2,368$$

The electronic device 101 (e.g., the processor 200) may use the FrameSize roundup function to align the pre_skipAudioSize1 calculated from the drop_time1 in units of the frame size (e.g., FrameSize = channel_count $\times$ sample_size_byte). Since FrameSize = 2$\times$2 = 4, the final size of audio data to be skipped may be calculated as 2,368 bytes, which is a multiple of the FrameSize.

In operation 1010, the electronic device 101 (e.g., the processor 200) may determine the last playback position of the first audio data block based on the size of the audio to be skipped.

In the example described above, since the size of the audio data to be skipped is 2,368 bytes, the electronic device 101 (e.g., the processor 200) may calculate the size of audio data to be used as 1,728 (= pcm_byte - skipAudioSize1 = 4,096 - 2,368). The last playback position may then be determined as 1,728, which indicates a byte offset from the start time of the first audio data block to the last byte of the audio data to be used. For the first media data with a set end_time, the last playback position may indicate first audio data that was not output for audio playback in the last audio data block (e.g., the first audio data block) of the first media data.

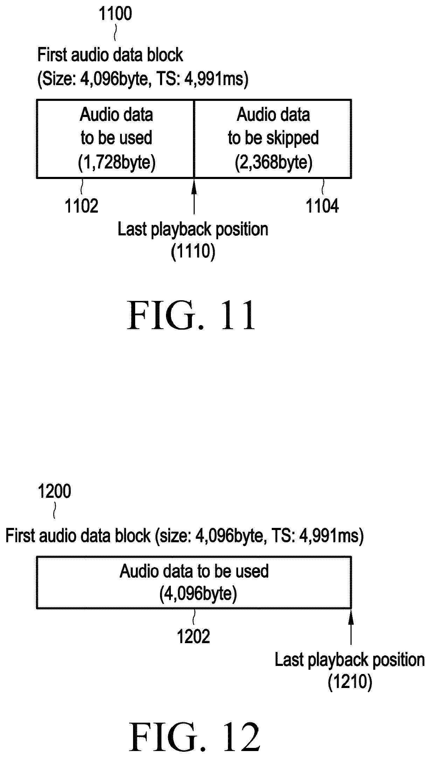

An embodiment of operations 1006, 1008, and 1010 will be described later with reference to FIG. 11.

In operation 1012, since no end_time is set for the first media data, the electronic device 101 (e.g., the processor 200) may identify that the first audio data block is the last audio block of the first media data generated through demultiplexing and decoding, and determine the last position of the first audio data block as the last playback position.

FIG. 11 is a diagram illustrating an example of determining a last playback position for media data with a set end time according to an embodiment of the disclosure.

Referring to FIG. 11, a first audio data block 1100 corresponding to the end_time of first media data (e.g., the first media data 312 of FIG. 3) may have a size of 4,096 bytes and a TS of 4,991ms. The electronic device 101 (e.g., the processor 200 of FIG. 2) may calculate the size of audio data 1104 to be skipped corresponding to the last 12.333ms of the first audio data block 1100 as 2,368 bytes, based on the playback time length (e.g., 21.333ms) and TS of the first audio data block 1100.

A last playback position 1110 may be calculated as 4,096 - 2,368 = 1,728. The electronic device 101 (e.g., the processor 200) may determine a part before the last playback position 1110 as audio data 1102 to be used for audio playback and a part after the last playback position 1110 as the audio data 1104 to be skipped for audio playback.

FIG. 12 is a diagram illustrating an example of determining a last playback position for media data without a set end time according to an embodiment of the disclosure.

Referring to FIG. 12, a first audio data block 1200 corresponding to last audio data of first media data (e.g., the first media file 602 of FIG. 6) may have a size of 4,096 bytes and a TS of 4,991ms. The electronic device 101 (e.g., the processor 200 of FIG. 2) may determine 4,096, which indicates the last position of the first audio data block 1200, as a last playback position 1210. For the first media data without a set end_time, the last playback position 1210 may indicate the last audio data to be output for audio playback.

FIG. 13 is a flowchart illustrating a procedure for determining search target audio data according to an embodiment of the disclosure. In an embodiment, at least one of the operations described below may be performed by the electronic device 101 (e.g., the processor 200 of FIG. 2). According to embodiments, at least one of the operations described below may be omitted, modified, or reordered. For example, at least one of the operations described below may be performed in parallel with another operation or may be performed regardless of the illustrated order. In an embodiment, the procedure of FIG. 13 may correspond to operation 840 of FIG. 8.

Referring to FIG. 13, in operation 1302, the electronic device 101 (e.g., the processor 200 of FIG. 2) may identify the size and start time (e.g., start_time) of second media data. For example, the start_time indicating the playback start time of the second media data (e.g., the second media data 314 of FIG. 3) identified for split playback may be set as a split position (e.g., 5,000ms) designated by the electronic device 101 (e.g., the processor 200). For example, the start_time of the separately generated second media data (e.g., the second media file 604) may be 0.

In operation 1304, the electronic device 101 (e.g., the processor 200) may determine whether the start_time is greater than 0. When the start_time is greater than 0, the electronic device 101 (e.g., the processor 200) may proceed to operation 1306. When the start_time is not greater than 0 (e.g., it is 0), the electronic device 101 (e.g., the processor 200) may proceed to operation 1308.

In operation 1306, the electronic device 101 (e.g., the processor 200) may set a demultiplexing start position to an audio frame earlier than the start_time by a designated value (e.g., X=2). To secure previous audio frames for reference for decoding an audio frame corresponding to the start_time, the electronic device 101 (e.g., the processor 200) may determine the audio frame X (e.g., 2 frames) earlier than an audio frame with a timestamp closest to the start_time as the demultiplexing start position of the second media data.

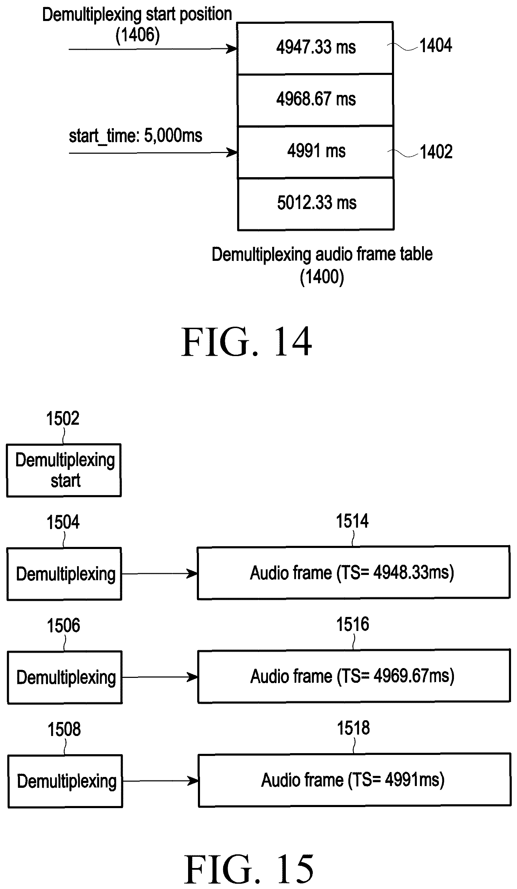

In operation 1308, the electronic device 101 (e.g., the processor 200) may set the demultiplexing start position to 0. In operation 1310, the electronic device 101 (e.g., the processor 200) may demultiplex audio frames at and after the demultiplexing start position (e.g., the demultiplexing start position 1406 of FIG. 14) through a demultiplexer (e.g., the demultiplexer 220 of FIG. 2). At least one audio frame before the start_time may be referenced by the decoder 230 for decoding an audio frame corresponding to the start_time. As the decoder 230 decodes the audio frame corresponding to the start_time by referencing the at least one previous audio frame, it may improve decoding quality and thus obtain the same decoding result as PCM data corresponding to the end_time in the first media data.

In operation 1312, the electronic device 101 (e.g., the processor 200) may decode the audio frames output from the demultiplexer 220 by the decoder 230. The decoder 230 may store PCM data generated by decoding the audio frames in the audio buffer 250.

In operation 1314, the electronic device 101 (e.g., the processor 200) may determine whether the size or playback time length of audio data (e.g., PCM data) output from the decoder 230 and stored in the audio buffer 250 is greater than a designated threshold (e.g., TH1). When the size or playback time length of the audio data after the decoding is not greater than TH1, the electronic device 101 (e.g., the processor 200) may return to operation 1312 to decode a next audio frame. When the size or playback time length of the audio data after the decoding is greater than TH1, the electronic device 101 (e.g., the processor 200) may proceed to operation 1316.

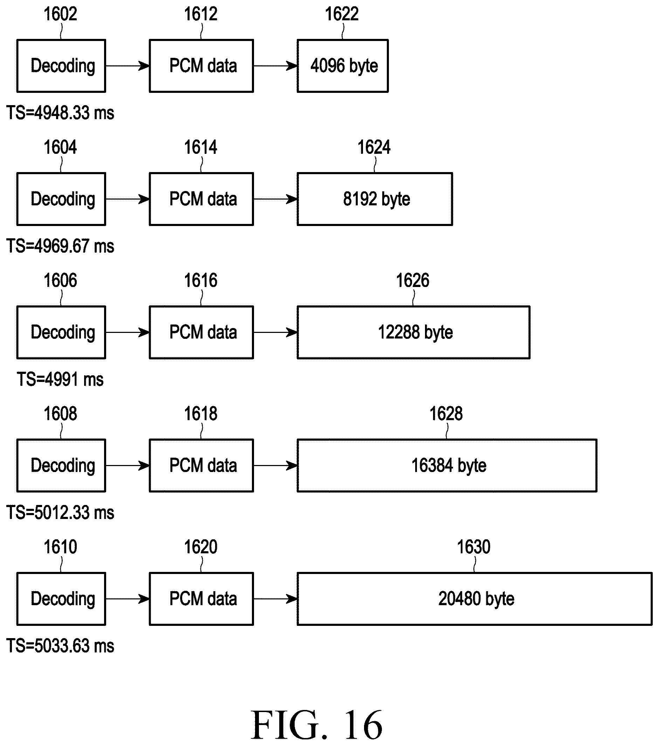

In operation 1316, the electronic device 101 (e.g., the processor 200) may determine the audio data with the size greater than TH1 stored in the audio buffer 250 as a second audio data block to be searched. An embodiment of operations 1312, 1314, and 1316 may be described later with reference to FIG. 16.

FIG. 14 is a diagram illustrating setting of a demultiplexing start position according to an embodiment of the disclosure.

Referring to FIG. 14, a demultiplexing audio frame table 1400 may store TS values of audio frames input to a demultiplexer (e.g., the demultiplexer 220 of FIG. 2). For example, when a start_time set to demultiplex second media data for split playback is 5,000ms, a TS closest to the start_time is 4,991ms. The electronic device 101 (e.g., the processor 200 of FIG. 2) may determine an audio frame 1404 (e.g., an audio frame with a TS of 4947.33ms) earlier than an audio frame 1402 with the TS of 4,991ms closest to the start_time by a designated value (e.g., 2) as the demultiplexing start position 1406.

In an embodiment, when there is no audio frame earlier than the audio frame (e.g., the audio frame 1402) corresponding to the start_time by two audio frames, the electronic device 101 (e.g., the processor 200) may determine an audio frame (e.g., an audio frame with a TS of 4968.67ms) earlier by one audio frame as the demultiplexing start position. In an embodiment, when there is no audio frame earlier than the audio frame (e.g., the audio frame 1402) corresponding to the start_time by one audio frame, the electronic device 101 (e.g., the processor 200) may determine the audio frame (e.g., the audio frame 1402) corresponding to the start_time as the demultiplexing start position.

In an embodiment, the electronic device 101 (e.g., the processor 200) may determine an audio frame (e.g., an audio frame with a TS of 4,935ms (not shown)) corresponding to a time position (e.g., 4,930ms) earlier than the start_time by a designated time value (e.g., 70ms) as the demultiplexing start position.

FIG. 15 is a diagram illustrating a demultiplexing operation from a demultiplexing start position according to an embodiment of the disclosure.

Referring to FIG. 15, in operation 1502, a demultiplexer (e.g., the demultiplexer 220 of FIG. 2) may start demultiplexing from a demultiplexing start position (e.g., a timestamp of 4,948.33ms) determined, for example, in operation 1306 or operation 1308. In operation 1504, the demultiplexer 220 may demultiplex second media data and output a first audio frame (e.g., the audio frame 1514 with the TS of 4,948.33ms) designated as the demultiplexing start position. In operation 1506, the demultiplexer 220 may output a second audio frame (e.g., the audio frame 1516 with the TS of 4,969.67ms) from the demultiplexing start position. In operation 1508, the demultiplexer 220 may output a third audio frame (e.g., the audio frame 1518 with the TS of 4,991ms) from the demultiplexing start position.

According to an embodiment, the audio frame 1518 with the TS of 4,991ms corresponds to the start_time of the second media data, and a decoder (e.g., the decoder 230 of FIG. 2) may output the same decoding result (e.g., PCM data) as the audio frame with the TS of 4,991ms within the last audio data block (e.g., the first audio data block) of first media data by decoding the audio frame 1518 with the TS of 4,991ms, referring to the audio frame 1514 with the TS of 4,948.33ms and the audio frame 1516 with the TS of 4,969.67ms.

In an embodiment, the electronic device 101 (e.g., the processor 200 of FIG. 2) may transmit at least one of encoder padding information or encoder delay information, which refers to a mute audio data period obtained by the demultiplexer 220, to the decoder 230. The decoder 230 may discard mute audio data in the mute audio data period without including it in the second audio data block, based on at least one of the encoder padding information or the encoder delay information.

FIG. 16 is a diagram illustrating determination of a search target audio data block according to an embodiment of the disclosure.

Referring to FIG. 16, the electronic device 101 (e.g., the processor 200 of FIG. 2) may control the demultiplexer (e.g., the demultiplexer 220 of FIG. 2) and the decoder (e.g., the decoder 230 of FIG. 2) to repeatedly perform demultiplexing and decoding until audio data with a size or playback time length greater than or equal to a designated threshold (e.g., TH1) is secured. For example, when TH1 = 19,200 bytes or 100ms, an example of the operation of determining the second audio data block (e.g., operations 1312, 1314, and 1316) is as follows.

In operation 1602, the decoder 230 may decode an audio frame with a TS of 4,948.33ms, which is set as the demultiplexing start position, from the demultiplexer 220 to generate PCM data 1612 with a size of 4,096 bytes and store it in the audio buffer (e.g., the audio buffer 240 of FIG. 2). Since the PCM data 1612 is a first decoding result of the second media data, the size of decoded audio data 1622 stored in the audio buffer 240 is 4,096 bytes.

In operation 1604, the decoder 230 may decode an audio frame with a TS of 4,969.67ms from the demultiplexer 220 to generate PCM data 1614 with a size of 4,096 bytes and store it in the audio buffer 240. The size of decoded audio data 1624 stored in the audio buffer 240 is 8,192 bytes.

In operation 1606, the decoder 230 may decode an audio frame with a TS of 4,991ms from the demultiplexer 220 to generate PCM data 1614 with a size of 4,096 bytes and store it in the audio buffer 240. The size of decoded audio data 1624 stored in the audio buffer 240 is 12,288 bytes.

In operation 1608, the decoder 230 may decode an audio frame with a TS of 5,012.33ms from the demultiplexer 220 to generate PCM data 1618 with a size of 4,096 bytes and store it in the audio buffer 240. The size of decoded audio data 1628 stored in the audio buffer 240 is 16,384 bytes.

In operation 1610, the decoder 230 may decode an audio frame with a TS of 5,033.63ms from the demultiplexer 220 to generate PCM data 1620 with a size of 4,096 bytes and store it in the audio buffer 240. The size of decoded audio data 1630 stored in the audio buffer 240 is 20,480 bytes.

The electronic device 101 (e.g., the processor 200) may identify that the decoded audio data 1630 of the second media data stored in the audio buffer 240 is greater than the size (e.g., 19,200 bytes) corresponding to 100ms, and determine the decoded audio data 1630 stored in the audio buffer 240 as the second audio data block to be searched.

FIG. 17 is a flowchart illustrating a procedure for detecting audio data according to an embodiment of the disclosure. In an embodiment, at least one of the operations described below may be performed by the electronic device 101 (e.g., the processor 200 of FIG. 2). According to embodiments, at least one of the operations described below may be omitted, modified, or reordered. For example, at least one of the operations described below may be performed in parallel with another operation or may be performed regardless of the illustrated order. In an embodiment, the procedure of FIG. 17 may correspond to operation 850 of FIG. 8.

Referring to FIG. 17, in operation 1702, the electronic device 101 (e.g., the processor 200 of FIG. 2) may determine a search target channel. In an embodiment, the channel count of the first media data and the second media data may have a value of 2 or more, and the electronic device 101 (e.g., the processor 200) may determine at least one channel (e.g., L channel to be used as a search target among a plurality of channels (e.g., L channel and R channel).

According to an embodiment, when each audio frame of the first media data and the second media data includes two or more audio channels (e.g., a left audio channel and a right audio channel), the electronic device 101 (e.g., the processor 200) may detect the location of matching audio data in the first media data and the second media data more quickly and efficiently by determining any one audio channel as a search target.

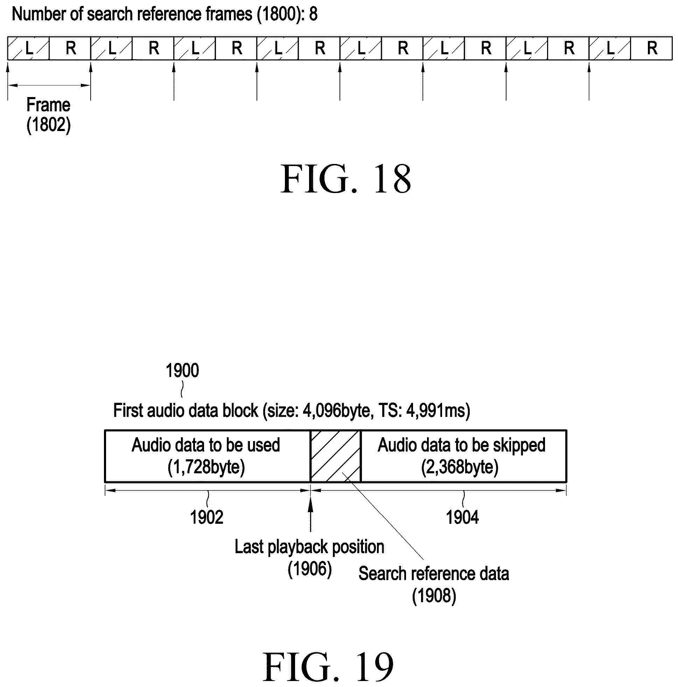

According to an embodiment, when the value of the channel count is 1, all audio data may be a comparison target. When the value of the channel count is greater than or equal to 2, the electronic device 101 (e.g., the processor 200) may determine any one audio channel (e.g., the left channel) as a search target. In an embodiment, for more accurate audio search, the electronic device 101 (e.g., the processor 200) may determine one or more audio channels (e.g., the left channel and the right channel) as a search target. An embodiment of operation 1702 will be described later with reference to FIG. 18.

In operation 1704, the electronic device 101 (e.g., the processor 200) may calculate a search reference data size (e.g., TH2 = FrameSize $\times$ NofFrames = 4$\times$8 = 32 bytes) from a frame size (e.g., FrameSize=4) and a designated number of search reference frames (e.g., NofFrames=8). The electronic device 101 (e.g., the processor 200) may set the number of search reference frames according to an arbitrary criterion.

In operation 1706, the electronic device 101 (e.g., the processor 200) may determine whether the size (e.g., skipAudioSize1) of audio data to be skipped according to the last playback position of the first audio data block is greater than or equal to the search reference data size. When the audio data to be skipped, which was not used for audio playback, is decoded from a number of audio frames that is greater than or equal to the number of search reference data frames to be used for the audio search, the size of the audio data to be skipped may be greater than or equal to the search reference data size. When the size of the audio data to be skipped is greater than or equal to the search reference data size, the electronic device 101 (e.g., the processor 200) may proceed to operation 1708. When the size of the audio data to be skipped is smaller than the search reference data size, the electronic device 101 (e.g., the processor 200) may proceed to operation 1710.

In operation 1708, the electronic device 101 (e.g., the processor 200) may determine audio data at the last playback position and audio data thereafter in the first audio data block as search reference data. In an embodiment, the search reference data may include audio data (e.g., PCM data) of the search reference data size from the audio data (e.g., the audio data to be skipped 1104) not used for audio playback in the first audio data block. In an embodiment, the search reference data may include PCM data of at least one selected channel (e.g., the L channel) from the PCM data at and after the last playback position in the first audio data block. An embodiment of operations 1704, 1706, and 1708 will be described later with reference to FIG. 19.

In operation 1710, the electronic device 101 (e.g., the processor 200) may determine audio data up to the last playback position of the first audio data block as search reference data. In an embodiment, the search reference data may include audio data (e.g., PCM data) of the search reference data size from audio data (e.g., the audio data to be skipped 1104) used for audio playback in the first audio data block. In an embodiment, the search reference data may include PCM data of at least one selected channel (e.g., the L channel) from the PCM data at and before the last playback position in the first audio data block. When the search reference data includes audio data used for audio playback, the electronic device 101 (e.g., the processor 200) may determine audio data after audio data identical to the search reference data in the second media data as the playback start position.

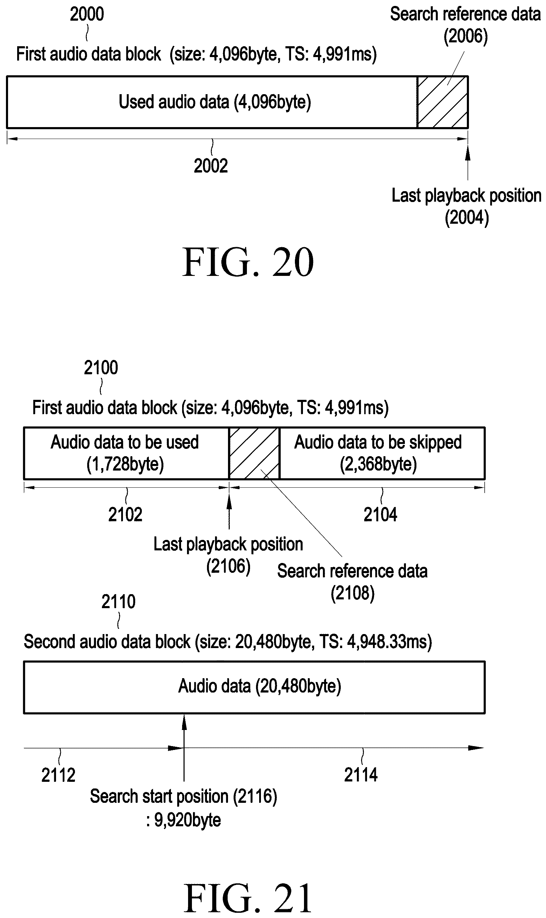

In an embodiment, when an end_time is not set for the first media data, the last playback position 1210 may be determined as the last position of the first audio data block 1200, as described with reference to FIG. 12, and the electronic device 101 (e.g., the processor 200) may determine audio data before the last position of the first audio data block 1200 as the search reference data. An embodiment of operation 1710 will be described later with reference to FIG. 20.

In operation 1712, the electronic device 101 (e.g., the processor 200) may determine whether a start_time set for the second media data is greater than 0. When the start_time is greater than 0, the electronic device 101 (e.g., the processor 200) may proceed to operation 1714. When the start_time is not greater than 0 (e.g., it is 0), the electronic device 101 (e.g., the processor 200) may proceed to operation 1716.

In operation 1714, the electronic device 101 (e.g., the processor 200) may search the second audio data block from a data position corresponding to the start_time. In operation 1716, the electronic device 101 (e.g., the processor 200) may search the second audio data block from the start position of the second audio data block. In operations 1714 and 1716, the electronic device 101 (e.g., the processor 200) may search the second audio block for audio data identical to the search reference data.

In an embodiment, the electronic device 101 (e.g., the processor 200) may set a search start position of the second audio data block based on the TS of the first audio data block. For example, when the TS of the first audio data block is 4,991ms, the electronic device 101 (e.g., the processor 200) may determine the position of the second audio data block corresponding to 4,991ms and search for audio data identical to the search reference data from the determined position.

In operation 1718, the electronic device 101 (e.g., the processor 200) may determine whether the audio data identical to the search reference data exists in the second audio data block. When the audio data identical to the search reference data exists, the electronic device 101 (e.g., the processor 200) may proceed to operation 1720. On the other hand, when the audio data identical to the search reference data does not exist, the electronic device 101 (e.g., the processor 200) may proceed to operation 1722.

In operation 1720, the electronic device 101 (e.g., the processor 200) may determine a playback start position based on the position of the detected audio data in the second audio data block. In an embodiment, the playback start position may be set as the position of the detected audio data or as the next byte of the detected audio data. In operation 1722, the electronic device 101 (e.g., the processor 200) may determine the start position of the second audio data block (e.g., 0 bytes) as the playback start position.

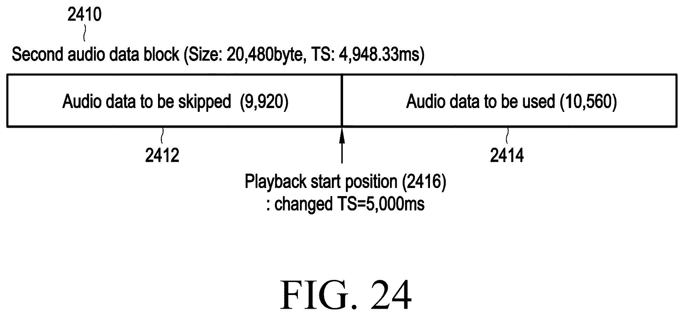

An embodiment of operations 1712, 1714, 1718, and 1720 will be described later with reference to FIGS. 21, 22, and 23. An embodiment of operation 1722 will be described later with reference to FIG. 24.

FIG. 18 is a diagram illustrating determination of a search target channel according to an embodiment of the disclosure.

Referring to FIG. 18, a designated number 1800 (e.g., 8) of search reference frames in the first audio data block are shown. When the channel count is 2, each audio frame (e.g., an audio frame 1802), which is defined by a designated frame size (e.g., FrameSize), may include audio data of the L channel and audio data of the R channel.

The audio data of the L channel and the audio data of the R channel may be arranged repeatedly in each audio frame (e.g., the audio frame 1802). When the sample byte size (sample_size_byte) is 2, the electronic device 101 (e.g., the processor 200 of FIG. 2) may calculate a frame size as follows, based on the channel count and the sample byte size.

$$\text{FrameSize} = \text{channel\_count} \times \text{sample\_size\_byte}$$

The electronic device 101 (e.g., the processor 200 of FIG. 2) may identify the audio data (e.g., PCM data) of the L channel at the start time of the audio data and move by FrameSize = 4 bytes to identify the audio data (e.g., PCM data) of the next L channel.

FIG. 19 is a diagram illustrating determination of search reference data based on a last playback position according to an embodiment of the disclosure.

Referring to FIG. 19, according to an embodiment, a first audio data block 1900 corresponding to the end_time of first media data (e.g., the first media data 312) may have a size of 4,096 bytes and a TS of 4,991ms. According to an embodiment, the first audio data block 1900 may be divided into 1,728-byte audio data 1902 to be used and 2,368-byte audio data 1904 to be skipped, with respect to a last playback position 1906.

The electronic device 101 (e.g., the processor 200 of FIG. 2) may determine search reference data 1908 of a designated size (e.g., 32 bytes) starting from the last playback position 1906 (e.g., 1,728 bytes) in the audio data to be skipped 1904. The search reference data 1908 may include PCM data of the designated search reference data size (e.g., 32 bytes). In an embodiment, the search reference data 1908 may include PCM data of at least one selected channel (e.g.,

the L channel) from the PCM data at and after the last playback position in the first audio data block.

The electronic device 101 (e.g., the processor 200) may determine the search reference data 1908 starting from the last playback position 1906 (e.g., 1,728 bytes) based on the last playback position 1906 indicating a data position not used for audio playback.

FIG. 20 is a diagram illustrating determination of search reference data based on a last position according to an embodiment of the disclosure.

Referring to FIG. 20, a first audio data block 2000 may include last audio data 2002 of first media data for which an end_time is not set, and all audio data 2002 of the first audio data block 2000 may be used for audio playback. The electronic device 101 (e.g., the processor 200 of FIG. 2) may determine audio data of a designated size (e.g., 32 bytes) before a last playback position 2004 indicating the last position of the first audio data block 2000, as search reference data 2006.

The electronic device 101 (e.g., the processor 200) may determine audio data (e.g., PCM data) of a designated search reference data size (e.g., 32 bytes) from the audio data 2002 used for audio playback in the first audio data block 2000 as the search reference data 2006. In an embodiment, the search reference data 2000 may include PCM data of at least one selected channel (e.g., the L channel) from the PCM data at and before the last playback position 2004 of the first audio data block 2000.

FIG. 21 is a diagram illustrating audio data search according to an embodiment of the disclosure.

Referring to FIG. 21, a first audio data block 2100 corresponding to the end_time of first media data (e.g., the first media data 312 in FIG. 3) may have a size of 4,096 bytes and a TS of 4,991ms. The first audio data block 2100 may be divided into, for example, 1,728-byte audio data 2102 to be used and 2,368-byte audio data 2104 to be skipped, with respect to a last playback position 2106. The electronic device 101 (e.g., the processor 200 in FIG. 2) may determine search reference data 2108 of a specified size (e.g., 32 bytes) starting from the last playback position 2106 (e.g., 1,728 bytes) in the audio data 2104 to be skipped.

For a channel count of 2, the electronic device 101 (e.g., the processor 200) may use only the L channel for audio data search. The search reference data 2108 may include L-channel audio data (e.g., PCM data) corresponding to a specified number of audio frames (e.g., 8 frames), and the electronic device 101 (e.g., the processor 200) may search a second audio data block 2110 to determine whether it includes audio data identical to the search reference data 2108.

The electronic device 101 (e.g., the processor 200) may set a search start position 2116 (e.g., 9,920 bytes) of the first audio data block 2110, which corresponds to a start_time (e.g., 5,000ms) set for second media data, and start searching for audio data identical to the search reference data 2108 from the search start position 2116. In an embodiment, the second audio data block 2110 may include demultiplexed and decoded audio data starting not from an audio frame (e.g., the audio frame 1402) at 4,991ms corresponding to a start_time of 5,000ms, but from an audio frame (e.g., the audio frame 1404) at 4,948.33ms. Therefore, the search start position 2116 corresponding to the start_time of the second audio data block 2110 may be set to a non-zero data position (e.g., 9,920 bytes).

The start_time of the second media data is 5,000ms, and 5,000ms - 4,948.33ms = 51.667ms (= 51,667μs). When drop_time2 is set to 57,667μs, the size (e.g., skipAudioSize2) of audio data to be skipped in the second audio data block 2110 may be calculated as follows. In the following equation, pre_skipAudioSize2 may be an input to the roundup function in the form of an integer value.

pre_skipAudioSize2 = sampling_rate $\times$ channel_count $\times$ sample_size_byte $\times$ drop_time2 / 1,000,000

$$skipAudioSize2 = FrameSize\ roundup\ pre\_skipAudioSize2$$

$$9,920.064 = 48,000 \times 2 \times 2 \times 51,667 / 1,000,000$$

$$9,920 = FrameSize\ roundup\ 9,920$$

According to the calculation equation, the electronic device 101 (e.g., the processor 200) may calculate the size of the audio data to be skipped during the audio data search in the second audio data block 2110 as 9,920 bytes. This calculated size of the audio data to be skipped becomes the search start position 2116 of the second audio data block 2110.

The electronic device 101 (e.g., the processor 200) may search for audio data identical to the reference search data 2108 from the search start position 2116. When no matching data is detected in the audio data 2114 from the search start position 2116 to the end of the second audio data block 2110, the electronic device 101 (e.g., the processor 200) may search for matching data again in the audio data 2112 from the start position of the second audio data block 2110 to a position (e.g., 9,916 bytes) before the search start position 2116.

In the order described above, the electronic device 101 (e.g., the processor 200) may search for audio data identical to the L-channel audio data of the search reference data 2108 from the search start position 2116 of the second audio data block 2110.

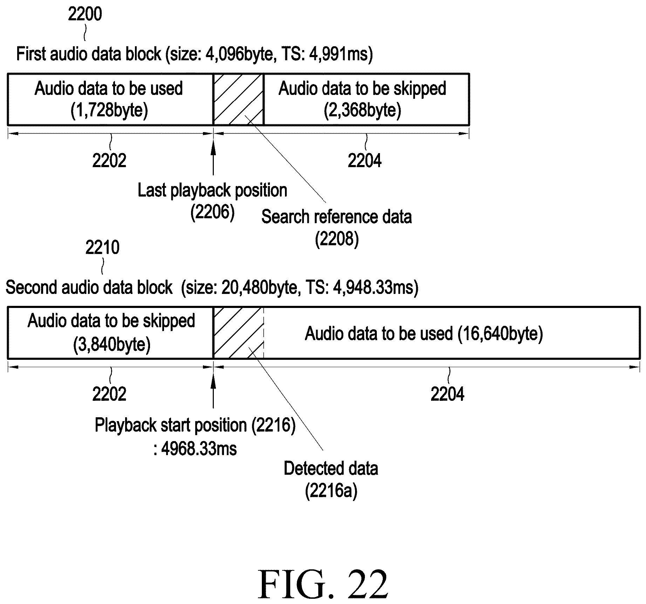

FIG. 22 is a diagram illustrating determination of a playback start position based on a search result according to an embodiment of the disclosure.

Referring to FIG. 22, a first audio data block 2200 corresponding to the end_time of first media data (e.g., the first media data 312 in FIG. 3) may have a size of 4,096 bytes and a TS of 4,991ms. The first audio data block 2200 may be divided into, for example, 1,728-byte audio data 2102 to be used and 2,368-byte audio data 2204 to be skipped, with respect to a last playback position 2206. The electronic device 101 (e.g., the processor 200 of FIG. 2) may determine search reference data 2208 of a specified size (e.g., 32 bytes) starting from the last playback position 2206 (e.g., 1,728 bytes) in the audio data 2204 to be skipped. In an embodiment, the search reference data 2208 may include audio data (e.g., L channel audio data) corresponding to at least one selected channel.

A second audio data block 2210 to be used as a search target may have, for example, a size of 20,480 bytes and a TS of 4,948.33ms. The electronic device 101 (e.g., the processor 200) may search the second audio data block 2210 to determine whether it includes audio data identical to the search reference data 2208. In an embodiment, the electronic device 101 (e.g., the processor 200) may search the second audio data block 2210 using only audio data (e.g., 16 bytes) corresponding to at least one selected channel in the search reference data 2208.

In an embodiment, the electronic device 101 (e.g., the processor 200) may detect audio data 2216a identical to the search reference data 2208 at a position corresponding to 4968.33ms of the second audio data block 2110. The detected position may be determined as a playback start position 2216. The electronic device 101 (e.g., the processor 200) may determine to skip 3,840-byte audio data 2212 before the playback start position 2216 and to use 16,640-byte audio data 2214 at and after the playback start position 2216, for audio playback.

In an embodiment, a playback time length corresponding to 3,840 bytes may be calculated as 20ms (= 3,840 $\times$ 1,000,000 / 48,000 / 2 / 2), using a sampling rate, a channel count, and a sample byte size. In an embodiment, the electronic device 101 (e.g., the processor 200) may change the TS of the second audio data block 2210 to 5,000ms. In another embodiment, the electronic device 101 (e.g., the processor 200) may change the TS of the second audio data block 2210 to 4968.33ms (= 4948.33ms + 20ms). The electronic device 101 (e.g., the processor 200) may output video frames synchronized with the changed TS (e.g., 4968.33ms).

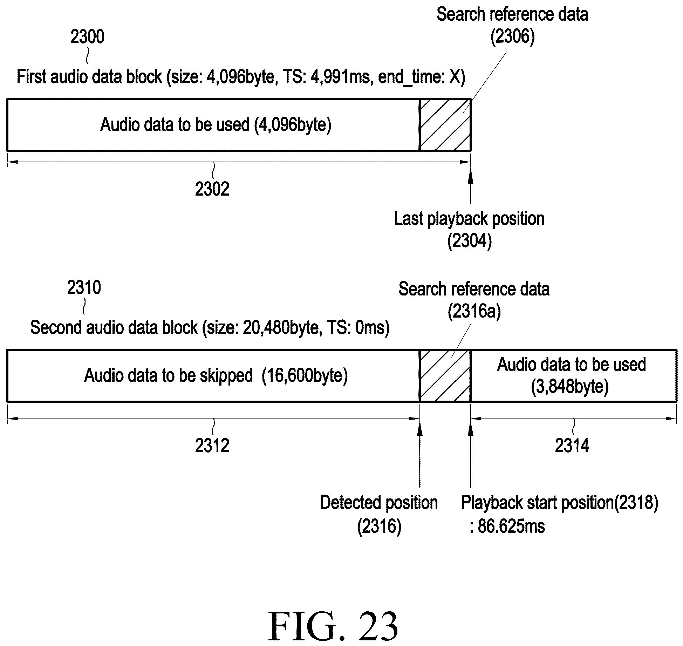

FIG. 23 is a diagram illustrating determination of a playback start position based on a search result according to an embodiment of the disclosure.

Referring to FIG. 23, a first audio data block 2300 may have a size of 4,096 bytes and a TS of 4,991ms. The first audio data block 2300 may include last audio data 2302 of first media data for which an end_time is not set, and all audio data 2302 (e.g., 4,096 bytes) of the first audio data block 2300 may be used for audio playback. The electronic device 101 (e.g., the processor 200 of FIG. 2) may determine audio data of a specified size (e.g., 32 bytes) before a last playback position 2304 indicating the end of the first audio data block 2300 as search reference data 2306.

The electronic device 101 (e.g., the processor 200) may determine audio data (e.g., PCM data) of a specified search reference data size in the audio data 2302 used for audio playback of the first audio data block 2300 as the search reference data 2306. In an embodiment, the search reference data 2306 may include PCM data of at least one selected channel (e.g., the L channel) in PCM data at and before the last playback position 2304 of the first audio data block 2300.

A second audio data block 2310 to be used as a search target may have, for example, a size of 20,480 bytes and a TS of 0ms. The electronic device 101 (e.g., the processor 200) may search the second audio data block 2310 to determine whether it includes audio data identical to the search reference data 2306. In an embodiment, the electronic device 101 (e.g., the processor 200) may search the second audio data block 2310 using only audio data (e.g., 16 bytes) corresponding to at least one selected channel in the search reference data 2306.

In an embodiment, the electronic device 101 (e.g., the processor 200) may detect audio data 2316a identical to the search reference data 2306 at a position corresponding to 16,600 bytes of the second audio data block 2310. A playback start position 2318 may be determined as a position (e.g., 16,632 bytes) after the size (e.g., 32 bytes) of the search reference data from the detected position 2316. The electronic device 101 (e.g., the processor 200) may determine to skip 16,600-byte audio data 2312 before the playback start position 2318 and the 32-byte search reference data 2316a after the detected position 2316, and to use 3,848-byte audio data 2314 at and after the playback start position 2318, for audio playback.

In an embodiment, the electronic device 101 (e.g., the processor 200) may change the TS of the second audio data block 2310 to 86.625ms. The electronic device 101 (e.g., the processor 200) may output video frames synchronized with the changed TS (= 86.625ms).

FIG. 24 is a diagram illustrating an operation in response to audio data search failure according to an embodiment of the disclosure.

Referring to FIG. 24, a second audio data block 2410 to be used as a search target may have a size of 20,480 bytes and a TS of 4,948.33ms. The electronic device 101 (e.g., the processor 200) may fail to detect audio data identical to search reference data (not shown) in the second audio data block 2410. In this case, a playback start position 2416 for the second audio data block 2410 may be determined to correspond to a start_time (e.g., 5,000ms) set for second media data.

In an embodiment, since the second audio data block 2410 includes audio data corresponding to a TS of 4948.33ms, which is earlier than the start_time, the electronic device 101 (e.g., the processor 200) may calculate the size of audio data 2412 to be skipped in the second audio data block 2410 during audio playback. Since the start_time of the second media data is 5,000ms, a time to be skipped in the second audio data block 2410 is 5,000ms - 4,948.33ms = 51.667ms = 51,667µs. Herein, the size of audio data corresponding to 57,667µs may be calculated as follows.

AudioSize = sampling_rate × channel_count × sample_size_byte × drop_time3 / 1,000,000

$$9{,}920.064 = 48{,}000 \times 2 \times 2 \times 51{,}667 / 1{,}000{,}000$$

According to the calculation equation, the electronic device 101 (e.g., the processor 200) may determine the size of audio data to be skipped during audio playback in the second audio data block 2410 as 9,920 bytes. The size of the audio data to be skipped becomes the playback start position 2416 of the second audio data block 2410 corresponding to start_time = 5,000ms. The electronic device 101 (e.g., the processor 200) may skip the audio data 2412 before the playback start position 2416 and output audio data 2414 at and after the playback start position 2416 continuously to the speaker 250 after the playback of the first media data.

In an embodiment, the electronic device 101 (e.g., the processor 200) may determine the TS of a video frame to be output based on the TS of audio data output according to the playback start position, and decode the video frame of the determined TS to output it to the display module 160 so that it is synchronized with the audio data.

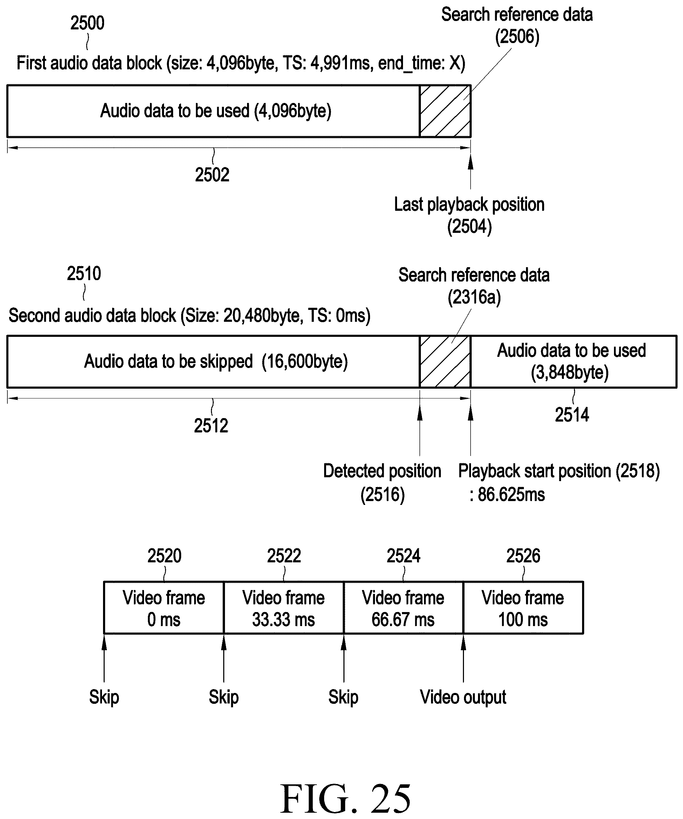

FIG. 25 is a diagram illustrating an operation of outputting video frames according to a changed TS of audio data according to an embodiment of the disclosure.

Referring to FIG. 25, a first audio data block 2500 may have a size of 4,096 bytes and a TS of 4,991ms. The first audio data block 2500 may include last audio data 2502 of first media data for which an end_time is not set, and all audio data 2502 (e.g., 4,096 bytes) of the first audio data block 2500 may be used for audio playback. The electronic device 101 (e.g., the processor 200 of FIG. 2) may determine audio data of a specified size (e.g., 32 bytes) before a last playback position 2504 indicating the end of the first audio data block 2500 as search reference data 2506.

The electronic device 101 (e.g., the processor 200) may determine audio data (e.g., PCM data) of a specified search reference data size in the audio data 2502 used for audio playback of the first audio data block 2500 as the search reference data 2506. In an embodiment, the search reference data 2506 may include PCM data of at least one selected channel (e.g., the L channel) from the PCM data at and before the last playback position 2504 of the first audio data block 2500.

A second audio data block 2510 to be used as a search target may have a size of 20,480 bytes and a TS of 0ms. The electronic device 101 (e.g., the processor 200) may search the second audio data block 2510 to determine whether it includes audio data identical to the search reference data 2506. In an embodiment, the electronic device 101 (e.g., the processor 200) may search the second audio data block 2510 using only audio data (e.g., 16 bytes) corresponding to at least one selected channel in the search reference data 2506.

In an embodiment, the electronic device 101 (e.g., the processor 200) may detect audio data 2516a identical to the search reference data 2506 at a position corresponding to 16,600 bytes of the second audio data block 2510. A playback start position 2518 may be determined as a position (e.g., 16,632 bytes) after the search reference data size from the detected position 2516. The electronic device 101 (e.g., the processor 200) may determine to skip the audio data 2512 of 16,600+32 bytes before the playback start position 2518 and to use 3,848-byte audio data 2514 at and after the playback start position 2518, for audio playback.

In an embodiment, the TS of the playback start position 2518 of the second media data may be changed to 86.625ms. The electronic device 101 (e.g., the processor 200) may demultiplex second media data (e.g., the second media file 604) using a demultiplexer (e.g., the demultiplexer 220 in FIG. 2) to obtain video frames 2520, 2522, 2524, and 2526 and decode the video frames 2520, 2522, 2524, and 2526 using a video decoder (not shown). When outputting the decoded video frames (e.g., video rendering), the electronic device 101 (e.g., the processor 200) may skip the video frames 2520, 2522, and 2524 at 0ms, 33.33ms, and 66.67ms, which are earlier than the TS (e.g., 86.625ms) of the playback start position 2518, and not output them (e.g., not perform video rendering). The electronic device 101 (e.g., the processor 200) may output a video frame 2526 at 100ms and subsequent video frames (not shown) to the display module 160 through video rendering.

When continuously playing back first media data (e.g., the first media file 602) and the second media data 604 that include an overlapping recording period (e.g., the overlapping data 610), the electronic device 101 (e.g., the processor 200) may remove the overlapping audio and video period and output them without interruption through the operations described above.

The electronic device 101 and the method for operating the same according to embodiments of the disclosure may prevent audio interruption by detecting the accurate last playback position of the first media data 312 and determining the playback start position of the second media data 314 based on the last playback position, when the media file 310 is divided into the first media data 312 and the second media data 314 that may include overlapping data and played back continuously.

The electronic device 101 and the method for operating the same according to embodiments of the disclosure may prevent audio interruption by determining the last playback position of the first media file 602, detecting overlapping data in the second media file 604 using the last playback position, and outputting audio after excluding the overlapping data, when continuously playing back the first media file 602 and the second media file 604 that include an overlapping recording period.

The electronic device 101 and the method for operating the same according to embodiments of the disclosure may provide a user with a seamless playback experience for both video and audio by skipping an overlapping data period based on a changed audio TS and outputting video frames synchronized with audio frames.

The electronic device 101 according to embodiments may include the memory 215 storing instructions, the speaker 250, and the at least one processor 200 operatively connected with the memory and the speaker. The instructions, when executed by the at least one processor, may cause the electronic device to obtain a first audio data block corresponding to an end time of first media data from the first media data. The instructions, when executed by the at least one processor, may cause the electronic device to identify a last playback position of the first audio data block based on the end time. The instructions, when executed by the at least one processor, may cause the electronic device to obtain a second audio data block to be used as a search target from second media data corresponding to the end time, based on a start time of the second media data. The instructions, when executed by the at least one processor, may cause the electronic device to search the second audio data block for audio data corresponding to the last playback position. The instructions, when executed by the at least one processor, may cause the electronic device to determine a playback start position of the second audio data block, based on the detected audio data. The instructions, when executed by the at least one processor, may cause the electronic device to output, to the speaker, audio data starting from the playback start position of the second media data, after completing audio playback of the first media data up to the last playback position of the first audio data block.

In an embodiment, the first audio data block may include first PCM (pulse code modulation) data obtained by decoding one or more audio frames of the first media data. In an embodiment, the second audio data block may include second PCM data obtained by decoding one or more audio frames of the second media data.

In an embodiment, the instructions may cause the electronic device to generate decoded audio data by decoding an audio frame prior to a designated number of audio frames from an audio frame corresponding to the start time, and one or more audio frames thereafter, in the second media data, and obtain the second audio data block of a designated size including the decoded audio data.

In an embodiment, the instructions may cause the electronic device to determine search reference data including audio data having a designated size in the first audio data block, based on the last playback position, search the second audio data block for audio data identical to the search reference data, and determine the playback start position based on a position of the detected audio data identical to the search reference data.

In an embodiment, the instructions may cause the electronic device to select at least one search target channel based on a channel count of the first media data, and compare audio data of the selected search target channel in the search reference data with the second audio data block.

In an embodiment, the instructions may cause the electronic device to calculate a size of audio data to be skipped without audio playback in the first audio data block, based on the end time of the first media data, determine whether the size of the audio data to be skipped is larger than a size of the search reference data, determine the search reference data to include audio data after the last playback position, in case that the size of the audio data to be skipped is larger than the size of the search reference data, and determine the search reference data to include audio data prior to the last playback position, in case that the size of the skip audio data audio data is not larger than the size of the search reference data.

In an embodiment, the instructions may cause the electronic device to change a timestamp of the second audio data block based on the playback start position.

In an embodiment, the last playback position may be determined based on a size, a sampling rate, a channel count, and a sample byte size of the first audio data block, and a timestamp indicating a playback start time of the first audio data block.

In an embodiment, the instructions cause the electronic device to output, to the speaker, audio data before the last playback position and at the last playback position in the first audio data block, and skip audio data after the last playback position in the first audio data block.

In an embodiment, the instructions may cause the electronic device to skip audio data before the playback start position in the second audio data block, and output, to the speaker, audio data at the playback start position and after the playback start position in the second audio data block.

A method for operating the electronic device 101 according to an embodiment may include obtaining (810) a first audio data block corresponding to an end time of first media data from the first media data. The method may include identifying (820) a last playback position of the first audio data block based on the end time. The method may include obtaining (840) a second audio data block to be used as a search target from second media data corresponding to the end time, based on a start time of the second media data. The method may include searching (850) the second audio data block for audio data corresponding to the last playback position. The method may include determining (860) a playback start position of the second audio data block, based on the detected audio data. The method may include outputting (870), to a speaker, audio data starting from the playback start position of the second media data, after completing audio playback of the first media data up to the last playback position of the first audio data block.

In an embodiment, the first audio data block may include first PCM (pulse code modulation) data obtained by decoding one or more audio frames of the first media data. In an embodiment, the second audio data block may include second PCM data obtained by decoding one or more audio frames of the second media data.

In an embodiment, obtaining a second audio block may include generating decoded audio data by decoding an audio frame prior to a designated number of audio frames from an audio frame corresponding to the start time, and one or more audio frames thereafter, in the second media data, and obtaining the second audio data block of a designated size including the decoded audio data.

In an embodiment, searching the second audio data block for audio data corresponding to the last playback position may include determining search reference data including audio data having a designated size in the first audio data block, based on the last playback position, and searching the second audio data block for the audio data identical to the search reference data.

In an embodiment, searching the second audio data block for audio data corresponding to the last playback position may include selecting at least one search target channel based on a channel count of the first media data, and comparing audio data of the selected search target channel in the search reference data with the second audio data block.

In an embodiment, determining search reference data may include calculating a size of audio data to be skipped without audio playback in the first audio data block, based on the end time of the first media data, determining whether the size of the audio data to be skipped is larger than a size of the search reference data, determining the search reference data to include audio data after the last playback position, in case that the size of the audio data to be skipped is larger than the size of the search reference data, and determining the search reference data to include audio data prior to the last playback position, in case that the size of the skip audio data audio data is not larger than the size of the search reference data.

In an embodiment, the method may further include changing a timestamp of the second audio data block based on the playback start position.

In an embodiment, the last playback position may be determined based at least one of a size, a sampling rate, a channel count, a sample byte size, or a timestamp indicating a playback start time of the first audio data block.

In an embodiment, the method may further include outputting, to the speaker, audio data before the last playback position and at the last playback position in the first audio data block, and skipping audio data after the last playback position in the first audio data block.

In an embodiment, outputting audio data starting from the playback start potion of the second media data may include skipping audio data before the playback start position in the second audio data block, and outputting, to the speaker, audio data at the playback start position and after the playback start position in the second audio data block.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (101) comprising:

   memory (215) storing instructions;
   a speaker (250); and
   at least one processor (200) operatively connected with the memory and the speaker,
   wherein the instructions, when executed by the at least one processor, cause the electronic device to:

      obtain a first audio data block corresponding to an end time of first media data from the first media data;
      identify a last playback position of the first audio data block based on the end time;
      obtain a second audio data block to be used as a search target from second media data corresponding to the end time, based on a start time of the second media data;
      search the second audio data block for audio data corresponding to the last playback position;
      determine a playback start position of the second audio data block, based on the detected audio data; and
      output, to the speaker, audio data starting from the playback start position of the second media data, after completing audio playback of the first media data up to the last playback position of the first audio data block.

2. The electronic device of claim 1, wherein the first audio data block includes first PCM (pulse code modulation) data obtained by decoding one or more audio frames of the first media data, and
   wherein the second audio data block includes second PCM data obtained by decoding one or more audio frames of the second media data.

3. The electronic device of claim 1 or 2, wherein the instructions cause the electronic device to:

generate decoded audio data by decoding an audio frame prior to a designated number of audio frames from an audio frame corresponding to the start time, and one or more audio frames thereafter, in the second media data; and
obtain the second audio data block of a designated size including the decoded audio data.

4. The electronic device of any one of claims 1 to 3, wherein the instructions cause the electronic device to:

determine search reference data including audio data having a designated size in the first audio data block, based on the last playback position;
search the second audio data block for audio data identical to the search reference data; and
determine the playback start position based on a position of the detected audio data identical to the search reference data.

5. The electronic device of claim 4, wherein the instructions cause the electronic device to:

select at least one search target channel based on a channel count of the first media data; and
compare audio data of the selected search target channel in the search reference data with the second audio data block.

6. The electronic device of claim 4 or 5, wherein the instructions cause the electronic device to:

calculate a size of audio data to be skipped without audio playback in the first audio data block, based on the end time of the first media data;
determine whether the size of the audio data to be skipped is larger than a size of the search reference data;
determine the search reference data to include audio data after the last playback position, in case that the size of the audio data to be skipped is larger than the size of the search reference data; and
determine the search reference data to include audio data prior to the last playback position, in case that the size of the skip audio data audio data is not larger than the size of the search reference data.

7. The electronic device of any one of claims 1 to 6, wherein the instructions cause the electronic device to change a timestamp of the second audio data block based on the playback start position.

8. The electronic device of any one of claims 1 to 7, wherein the last playback position is determined based on at least one of a size, a sampling rate, a channel count, a sample byte size, or a timestamp indicating a playback start time of the first audio data block.

9. The electronic device of any one of claims 1 to 8, wherein the instructions cause the electronic device to:

output, to the speaker, audio data before the last playback position and at the last playback position in the first audio data block; and
skip audio data after the last playback position in the first audio data block.

10. The electronic device of any one of claims 1 to 9, wherein the instructions cause the electronic device to:

skip audio data before the playback start position in the second audio data block; and
output, to the speaker, audio data at the playback start position and after the playback start position in the second audio data block.

11. A method for operating an electronic device (101), comprising:

obtaining (810) a first audio data block corresponding to an end time of first media data from the first media data;
identifying (820) a last playback position of the first audio data block based on the end time;
obtaining (840) a second audio data block to be used as a search target from second media data corresponding to the end time, based on a start time of the second media data;
searching (850) the second audio data block for audio data corresponding to the last playback position;
determining (860) a playback start position of the second audio data block, based on the detected audio data; and

outputting (870), to a speaker, audio data after the playback start position in the second media data, after completing audio playback of the first media data based on the last playback position.

12. The method of claim 11, wherein the first audio data block includes first PCM (pulse code modulation) data obtained by decoding one or more audio frames of the first media data, and
wherein the second audio data block includes second PCM data obtained by decoding one or more audio frames of the second media data.

13. The method of claim 11 or 12, wherein obtaining a second audio block comprises:

generating decoded audio data by decoding an audio frame prior to a designated number of audio frames from an audio frame corresponding to the start time, and one or more audio frames thereafter, in the second media data; and
obtaining the second audio data block of a designated size including the decoded audio data.

14. The method of any one of claims 11 to 13, wherein searching the second audio data block for audio data corresponding to the last playback position comprises:

determining search reference data including audio data having a designated size in the first audio data block, based on the last playback position; and
searching the second audio data block for the audio data identical to the search reference data.

15. The method of claim 14, wherein searching the second audio data block for audio data corresponding to the last playback position comprises:

selecting at least one search target channel based on a channel count of the first media data; and
comparing audio data of the selected search target channel in the search reference data with the second audio data block.

FIG. 1

EP 4 730 331 A1

FIG. 2

310

Media file

0 ms                                                10000 ms

Split →

312

First media data
(end_time=5,000ms)

314

Second media data
(start_time=5,000ms)

0 ms                          5000 ms                          10000 ms

# FIG. 3

402

Last audio data block of first media data
(TS: 4,991ms, size: 4,096byte)

Audio data

404

Last playback position
(406)

Audio mismatch
(420)

412

First audio data block of second media data
(TS: 4,991ms, size: 4,096byte)

Audio data

414

Playback start position
(416)

# FIG. 4

502

Last audio data block of first media data
(TS: 4,991ms, size: 4,096byte)

| Output audio data | P1 |
|---|---|

506

Last playback position
(504)

512

First audio data block of second media data
(TS: 4,991ms, size 4,096byte)

(a)

| | P2 | P3 |
|---|---|---|

Desired playback position  Actual playback position
(514)  : 4,996ms
(516)

522

First audio data block of second media data
(TS: 4,981ms, size 4,096byte)

(b)

| | P4 | P5 |
|---|---|---|

Actual playback position  Desired playback position
: 4,986ms  (524)
(526)

# FIG. 5

Overlapping data
(610)

602

First media file

0 ms

5000 ms

604

Second media file

0 ms

5000 ms

# FIG. 6

210

Controller

First audio
data block
of first
media data
(702)

712
Last audio
data decider

714
Last playback
position decider

Last playback position
(722)

718
Audio data
detector

716
Search target
decider

Second audio
data block
of second
media data
(704)

720
Playback start
position decider

Playback start position
(724)

FIG. 7

```
                          ┌─────────┐
                          │  Start  │
                          └─────────┘
                               │
                               ▼
      ┌────────────────────────────────────────────────┐
      │           Obtain first audio data block         │
      │    corresponding to end time of first media data │──810
      └────────────────────────────────────────────────┘
                               │
                               ▼
      ┌────────────────────────────────────────────────┐
      │   Identify last playback position of first audio data block │──820
      └────────────────────────────────────────────────┘
                               │
                               ▼
      ┌────────────────────────────────────────────────┐
      │    Output first media data up to last playback position │──830
      └────────────────────────────────────────────────┘
                               │
                               ▼
      ┌────────────────────────────────────────────────┐
      │           Obtain second audio data block         │
      │  corresponding to start time of second media data │──840
      └────────────────────────────────────────────────┘
                               │
                               ▼
      ┌────────────────────────────────────────────────┐
      │      Search second audio data block for audio data │
      │      corresponding to last playback position       │──850
      └────────────────────────────────────────────────┘
                               │
                               ▼
      ┌────────────────────────────────────────────────┐
      │        Determine playback start position          │
      │          of second audio data block               │──860
      └────────────────────────────────────────────────┘
                               │
                               ▼
      ┌────────────────────────────────────────────────┐
      │  Output second media data from playback start position │──870
      └────────────────────────────────────────────────┘
                               │
                               ▼
                          ┌─────────┐
                          │   End   │
                          └─────────┘
```

FIG. 8

Start

902

Demultiplex and decode first media data

904

Last audio data block?

No → Output audio 912

Yes

Store first audio data block 906

Identify last playback position 908

Output audio 910

End

FIG. 9

Start

Identify TS and size of
first audio data block ⌐1002

end_time existing? ⌐1004

No

Yes

calculate playback time
length of first audio data block ⌐1006

Calculate size of audio to be skipped ⌐1008

Determine last playback position ⌐1010

Determine last position
of first audio data block as
last playback position ⌐1012

End

# FIG. 10

1100

First audio data block
(Size: 4,096byte, TS: 4,991ms)

| Audio data to be used (1,728byte) | Audio data to be skipped (2,368byte) |
|---|---|

1102                1104

Last playback position
(1110)

# FIG. 11

1200

First audio data block (size: 4,096byte, TS: 4,991ms)

| Audio data to be used (4,096byte) |
|---|

1202

Last playback position
(1210)

# FIG. 12

```
                          ┌──────────┐
                          │  Start   │
                          └──────────┘
                               │
                               ▼                    ┌─1302
              ┌──────────────────────────────────┐
              │  Identify size and start_time    │
              │     of second media data         │
              └──────────────────────────────────┘
                               │
                               ▼                      ┌─1304
                        ╱─────────────╲                      No
                   ╱─────               ─────╲
                  ◄      start_time > 0 ?      ►──────────────┐
                   ╲─────               ─────╱                │
                        ╲─────────────╱                       │
                               │                              │
                              Yes        ┌─1306               │          ┌─1308
                               ▼                               ▼
         ┌──────────────────────────────────┐      ┌──────────────────────────┐
         │ Determine demultiplexing start    │      │      Demultiplexing      │
         │ position as position before       │      │   start position = 0     │
         │ start_time by X frames            │      │                          │
         └──────────────────────────────────┘      └──────────────────────────┘
                               │                              │
                               ▼◄─────────────────────────────┘
         ┌──────────────────────────────────┐
         │    Demultiplex second media data  │─1310
         │  from demultiplexing start position│
         └──────────────────────────────────┘
                               │
                               ▼                   ┌─1312
         ┌──────────────────────────────────┐◄──────────┐
         │ Decode audio frames after demultiplexing │     │
         └──────────────────────────────────┘           │
                               │                         │
                               ▼              ┌─1314      │
                        ╱─────────────╲               No  │
                   ╱─────   Size of      ─────╲           │
                  ◄  decoded audio data > TH1?   ►────────┘
                   ╲─────               ─────╱
                        ╲─────────────╱
                               │
                              Yes
                               ▼
         ┌──────────────────────────────────┐
         │ Determine decoded audio data as   │─1316
         │ second audio data block to be searched │
         └──────────────────────────────────┘
                               │
                               ▼
                          ┌──────────┐
                          │   End    │
                          └──────────┘
```

# FIG. 13

Demultiplexing start position
(1406)

| |
|---|
| 4947.33 ms |
| 4968.67 ms |
| 4991 ms |
| 5012.33 ms |

~1404

~1402

start_time: 5,000ms

Demultiplexing audio frame table
(1400)

FIG. 14

1502

| Demultiplexing start |
|---|

1504

| Demultiplexing |
|---|

1514

| Audio frame (TS= 4948.33ms) |
|---|

1506

| Demultiplexing |
|---|

1516

| Audio frame (TS= 4969.67ms) |
|---|

1508

| Demultiplexing |
|---|

1518

| Audio frame (TS= 4991ms) |
|---|

FIG. 15

1602

Decoding

TS=4948.33 ms

1612

PCM data

1622

4096 byte

1604

Decoding

TS=4969.67 ms

1614

PCM data

1624

8192 byte

1606

Decoding

TS=4991 ms

1616

PCM data

1626

12288 byte

1608

Decoding

TS=5012.33 ms

1618

PCM data

1628

16384 byte

1610

Decoding

TS=5033.63 ms

1620

PCM data

1630

20480 byte

FIG. 16

Start

Search target channel ——1702

Calculate search reference
data size (TH2) ——1704

1706

Size of audio to be skipped > TH2? —— No

Yes ——1708

Determine search reference
data after last playback position

1710

Determine search reference data
before last playback position

1712

start_time > 0 ? —— No

Yes ——1714

Search second audio data
block from start_time

1716

Search second audio data
block from start position

1718

Audio data
identical to search reference
data existing? —— No

Yes ——1720

Determine playback start position
based on position of detected audio data

1722

Determine playback start
position based on start_time

End

FIG. 17

Number of search reference frames (1800): 8

| /L/ | R | /L/ | R | /L/ | R | /L/ | R | /L/ | R | /L/ | R | /L/ | R | /L/ | R |

Frame
(1802)

# FIG. 18

1900

First audio data block (size: 4,096byte, TS: 4,991ms)

| Audio data to be used (1,728byte) | //// | Audio data to be skipped (2,368byte) |

1902

1904

Last playback position
(1906)

Search reference data
(1908)

# FIG. 19

2000

First audio data block  (size: 4,096byte, TS: 4,991ms)

Search reference data
(2006)

| Used audio data (4,096byte) | //// |

2002

Last playback position
(2004)

# FIG. 20

2100

First audio data block (size: 4,096byte, TS: 4,991ms)

| Audio data to be used (1,728byte) | //// | Audio data to be skipped (2,368byte) |

2102

2104

Last playback position
(2106)

Search reference data
(2108)

2110

Second audio data block (size: 20,480byte, TS: 4,948.33ms)

| Audio data (20,480byte) |

2112

2114

Search start position (2116)
: 9,920byte

# FIG. 21

2200

First audio data block (size: 4,096byte, TS: 4,991ms)

| Audio data to be used (1,728byte) | ///// | Audio data to be skipped (2,368byte) |
|---|---|---|

2202

Last playback position
(2206)

Search reference data
(2208)

2210

Second audio data block  (size: 20,480byte, TS: 4,948.33ms)

| Audio data to be skipped (3,840byte) | ///// | Audio data to be used (16,640byte) |
|---|---|---|

2202

2204

Playback start position (2216)
: 4968.33ms

Detected data
(2216a)

# FIG. 22

Search reference data
(2306)

2300

First audio data block (size: 4,096byte, TS: 4,991ms, end_time: X)

| Audio data to be used (4,096byte) | ▨ |

2302

Last playback position
(2304)

2310

Search reference data
(2316a)

Second audio data block (size: 20,480byte, TS: 0ms)

| Audio data to be skipped  (16,600byte) | ▨ | Audio data to be used (3,848byte) |

2312

2314

Detected position
(2316)

Playback start position(2318)
: 86.625ms

# FIG. 23

2410

Second audio data block (Size: 20,480byte, TS: 4,948.33ms)

| Audio data to be skipped (9,920) | Audio data to be used (10,560) |
|---|---|

2412

2414

Playback start position (2416)
: changed TS=5,000ms

# FIG. 24

2500

First audio data block (size: 4,096byte, TS: 4,991ms, end_time: X)

Search reference data
(2506)

| Audio data to be used (4,096byte) | ///// |
|---|---|

2502

Last playback position
(2504)

2510

Second audio data block (Size: 20,480byte, TS: 0ms)

Search reference data
(2316a)

| Audio data to be skipped  (16,600byte) | ///// | Audio data to be used (3,848byte) |
|---|---|---|

2512

2514

Detected position
(2516)

Playback start position (2518)
: 86.625ms

| 2520 | 2522 | 2524 | 2526 |
|---|---|---|---|
| Video frame 0 ms | Video frame 33.33 ms | Video frame 66.67 ms | Video frame 100 ms |

Skip      Skip      Skip      Video output

# FIG. 25

## INTERNATIONAL SEARCH REPORT

| International application No. |
| --- |
| **PCT/KR2024/006714** |

| | |
| --- | --- |
| **A.** | **CLASSIFICATION OF SUBJECT MATTER** |

**G11B 20/10**(2006.01)i; **G11B 20/12**(2006.01)i; **G11B 27/19**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

G11B 20/10(2006.01); G10L 19/00(2006.01); G10L 19/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 오디오(audio), 블록(block), 종료(end), 시작(start), 시점(time point), 재생 (reproduction), 위치(position), 탐색(find), 프레임(frame), 디코딩(decoding), PCM(pulse code modulation), 크기(size), 기준 (reference), 채널(channel), 스킵(skip), 타임스탬프(timestamp)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X<br><br>Y | JP 2001-337698 A (SONY CORP.) 07 December 2001 (2001-12-07)<br>See paragraphs [0009], [0012] and [0079]-[0083]; claim 1; and figures 13-14. | 1-5,7-8,11-15<br><br>6,9-10 |
| Y | JP 5368988 B2 (PANASONIC CORP.) 18 December 2013 (2013-12-18)<br>See paragraph [0021]; and figure 1. | 6,9-10 |
| A | JP 2005-122034 A (FUJITSU TEN LTD.) 12 May 2005 (2005-05-12)<br>See paragraphs [0023]-[0037]; claims 1-4; and figures 1-7. | 1-15 |
| A | JP 2007-033585 A (MATSUSHITA ELECTRIC IND. CO., LTD.) 08 February 2007 (2007-02-08)<br>See paragraphs [0018]-[0025]; claims 1-2; and figures 1-2. | 1-15 |
| A | JP 2007-079063 A (SONY CORP.) 29 March 2007 (2007-03-29)<br>See paragraphs [0011]-[0032]; claims 1-3; and figures 1-2. | 1-15 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 August 2024** | **28 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/006714**

| Patent document cited in search report | | | Publication date (day/month/year) | Patent family member(s) | | | Publication date (day/month/year) |
|---|---|---|---|---|---|---|---|
| JP | 2001-337698 | A | 07 December 2001 | JP | 4441988 | B2 | 31 March 2010 |
| JP | 5368988 | B2 | 18 December 2013 | EP | 2141694 | A1 | 06 January 2010 |
| | | | | US | 2010-0208901 | A1 | 19 August 2010 |
| | | | | US | 8538565 | B2 | 17 September 2013 |
| | | | | WO | 2009-104402 | A1 | 27 August 2009 |
| JP | 2005-122034 | A | 12 May 2005 | JP | 4508599 | B2 | 21 July 2010 |
| JP | 2007-033585 | A | 08 February 2007 | JP | 4765460 | B2 | 07 September 2011 |
| JP | 2007-079063 | A | 29 March 2007 | JP | 4770348 | B2 | 14 September 2011 |

Form PCT/ISA/210 (patent family annex) (July 2022)